# EUROPEAN PATENT APPLICATION

(11) **EP 4 567 594 A1**
(43) Date of publication of application: **11.06.2025**
(21) Application number: 24813868.7
(22) Date of filing: 28.03.2024
(51) Int. Cl.: G06F 9/455

(54) **TERMINAL DEVELOPMENT-ORIENTED XR APPLICATION DEVELOPMENT SYSTEM AND METHOD, DEVICE, AND MEDIUM**

(30) Priority: 26.05.2023 CN 202310608630
(71) Applicant: TAOBAO (CHINA) SOFTWARE CO.,LTD., Hangzhou, Zhejiang 311121 (CN)
(72) Inventor: LYU, Chengfei, Hangzhou, Zhejiang 311121 (CN); WU, Fei, Hangzhou, Zhejiang 311121 (CN); WU, Ziqi, Hangzhou, Zhejiang 311121 (CN); XIU, Yutong, Hangzhou, Zhejiang 311121 (CN); CAI, Yu, Hangzhou, Zhejiang 311121 (CN); NIU, Chaoyue, Hangzhou, Zhejiang 311121 (CN)
(74) Representative: Marks & Clerk LLP
(86) International application number: PCT/CN2024/084511
(87) International publication number: WO 2024/244662

(57) **Abstract**

The embodiments of the present application provides an XR application development system, method, device, and medium for terminal devices. In some embodiments, the XR application development system includes a runtime container, a content generator, and an application generation platform. The runtime container is integrated into the content generator, which generates the application content for the XR application based on the runtime environment provided by the runtime container. When the application content is generated, the application generation platform generates the XR application based on the application content and the runtime container. The runtime container operates between the application content and the operating system, providing a runtime environment for the application content. By adding the runtime container between the application content and the operating system, the strong dependency between the application content and the operating system is eliminated, enabling cross-platform and cross-device development and execution of XR applications. This simplifies the development and implementation of XR applications and solves the issues related to the development and cross-device operation of XR applications.

## Description

### CROSS -REFERENCE TO RELATED APPLICATION

This application claims priority to the Chinese patent application filed on May 26, 2023, with the application number 202310608630.6 and titled "XR Application development system, Method, Device, and Medium for Terminal Devices." The entire content of the aforementioned application is incorporated herein by reference.

### TECHNICAL FIELD

The present application relates to the field of internet technology, and more specifically, to an XR application development system, method, device, and medium for terminal devices.

### BACKGROUND

Extended Reality (XR) is a collective term that encompasses Augmented Reality (AR) and Virtual Reality (VR). VR refers to the technology that uses computers to generate a virtual world that directly affects participants' visual, auditory, and tactile sensations, allowing them to interactively observe and manipulate the virtual world. AR, on the other hand, is a technology that cleverly integrates virtual information with the real world. By utilizing various technologies such as multimedia, 3D modeling, intelligent interaction, and sensing, AR simulates and integrates computer-generated virtual information, such as text, images, 3D models, audio, and video, into the real world to "enhance" the real-world experience.

With the widespread adoption of XR technology, the supply of XR applications based on XR technology has become a pressing issue that needs to be addressed. Existing technologies include game development engines aimed at 3D game developers and 2D application development engines intended for terminal development engineers. However, these development engines are not suitable for developing XR applications. Therefore, there is an urgent need for a development solution that can effectively support XR application development.

### SUMMARY

Various aspects of the present application provide an XR application development system, method, device, and medium for terminal development, aimed at solving the problem of XR application development.

An embodiment of the present application provides an XR application development system for terminal devices, including: a runtime container for generating an XR application, configured to provide a runtime environment during a generation process and a running process of the XR application;
a content generator, internally integrating the runtime container, configured to generate the application content for the XR application based on the runtime environment provided by the runtime container;
an application generation platform, configured to generate the XR application based on the application content and the runtime container;
wherein, during the runtime of the XR application, the runtime container operates between the application content and an operating system of a target device where the XR application is located, and the application content operates within the runtime environment provided by the runtime container.

An embodiment of the present application provides an XR application development system method for terminal devices, including: pre-developing and generating the runtime container required for the XR application, where the runtime container provides a runtime environment during both the XR application generation process and its running process; in an integrated content generator with the runtime container, generating the application content of the XR application based on the runtime environment provided by the runtime container; generating the XR application based on the application content and the runtime container; wherein, during the runtime of the XR application, the runtime container operates between the application content and the operating system of the target device where the XR application is located, and the application content runs in the runtime environment provided by the runtime container.

An embodiment of the present application also provides a content generator, which integrates a runtime container required for generating the XR application. The runtime container provides a runtime environment during the XR application generation process or its running process. The content generator further includes:
a 3D scene effect editing module, which responds to the XR application generation operation, loads 3D scene static resources, and based on the runtime environment provided by the runtime container, edits dynamic information for the 3D scene static resources to obtain 3D scene resource data;
a 3D application logic editing module, which based on the runtime environment provided by the runtime container, edits application logic code for the 3D scene resource data to obtain the application content of the XR application;
wherein, the application content and the runtime container form the XR application, and the runtime container in the XR application provides a runtime environment for the application content during the runtime of the XR application.

An embodiment of the present application also provides an XR application editing method, applied to a content generator, where the content generator integrates a runtime container. The runtime container provides a runtime environment during the XR application generation process or its running process. The method includes: responding to the XR application generation operation by loading 3D scene static resources; based on the runtime environment provided by the runtime container, adding dynamic information to the 3D scene static resources to obtain 3D scene resource data; based on the runtime environment provided by the runtime container, editing application logic code for the 3D scene resource data to obtain the application content of the XR application; wherein, the application content and the runtime container form the XR application, and the runtime container in the XR application provides a runtime environment for the application content during the runtime of the XR application.

An embodiment of the present application also provides a runtime container, which provides a runtime environment during both the XR application generation process and its running process, including: a framework layer, a runtime environment layer, and a software library layer;
the software library layer includes a plurality of software engines and provides a second type of Application Programming Interface (API) for these a plurality of software engines, which is used to encapsulate and obtain a first type of API based on the second type of API;
the framework layer is used to provide the first type of API to application developers, allowing them to write the application logic code for the XR application based on the first type of API; additionally, during the XR application generation process or its running process, the framework layer perceives target events, executes the function entities of at least one first type of API corresponding to the target events, and provides the target API encapsulated in the function entities to the runtime environment layer. The target API belongs to the second type of API;
the runtime environment layer is used to respond to the target event by calling the corresponding software engine in the software library layer based on the target API.

An embodiment of the present application also provides an XR application running method, including: responding to a trigger operation for running the XR application by starting the runtime container in the XR application, in order to provide a runtime environment for the application content in the XR application. The runtime container operates between the application content and the operating system of the target device where the XR application is located; running the application content based on the runtime environment provided by the runtime container, in order to execute the XR application.

An embodiment of the present application also provides an XR content runtime method, applied to a host application embedded with an XR runtime container. The method includes: during the runtime of the host application, displaying access entry information for the XR content; responding to a trigger operation on the access entry information by starting the XR runtime container and retrieving the XR content; running the XR content based on the runtime environment provided by the XR runtime container.

An embodiment of the present application provides an electronic device, including: a memory, which is used to store a computer program; a processor, which is coupled to the memory and configured to execute the computer program in order to implement the steps of the XR application editing method, XR application running method, XR application development method, or XR content runtime method provided in the embodiments of the present application.

An embodiment of the present application provides a computer-readable storage medium storing a computer program, such that when the computer program is executed by a processor, the processor is enabled to perform the steps of the XR application editing method, XR application running method, XR application development method, or XR content runtime method provided in the embodiments of the present application.

In the embodiments of the present application, an XR application development system is provided, which includes a runtime container that can provide a runtime environment during both the XR application generation and runtime processes, a content generator responsible for content generation, and an application generation platform responsible for packaging the application. The runtime container is integrated within the content generator, and based on the runtime environment provided by the runtime container, the application content of the XR application is generated. When generating the application content, the application generation platform, based on the application content and the runtime container, generates the XR application, which includes both the application content and the runtime container. During the runtime of the XR application developed based on the runtime container, the runtime container operates between the application content and the operating system, providing a runtime environment for the application content so that it can run within this environment. By introducing the runtime container between the application content and the operating system, the strong dependency between the application content and the operating system is eliminated, allowing the XR application to be developed and run across platforms and devices. This simplifies and makes the development of XR applications easier to implement, resolving the issues of XR application development and cross-device operation.

### BRIEF DESCRIPTION OF THE DRAWINGS

The accompanying drawings described herein are provided to facilitate a better understanding of this application and constitute a part of the application. The illustrative embodiments and their descriptions in this application are provided to explain the application and do not impose undue limitations on its scope. In the drawings:
FIG. 1 is a schematic diagram of the structure of an XR application development system or terminal devices provided in the embodiment of the present application;
FIG. 2 is an implementation architecture of the runtime container provided in the embodiment of the present application;
FIG. 3 is a schematic diagram illustrating the relationship between the three layers of the runtime container architecture provided in the embodiment of the present application;
FIG. 4 is a schematic diagram of the framework during the runtime of an XR application provided in the embodiment of the present application;
FIG. 5 is a schematic diagram of a 3D scene embedded in a host 2D application provided in the embodiment of the present application;
FIG. 6a is a schematic diagram of the initialization process of an XR application provided in the embodiment of the present application;
FIG. 6b is a schematic diagram of the process of a user-triggered function call provided in the embodiment of the present application;
FIG. 6c is a schematic diagram of the process of a user-triggered event callback provided in the embodiment of the present application;
FIG. 6d is a schematic diagram of the structure of a content generator provided in the embodiment of the present application;
FIG. 7a is a schematic diagram of the process of an XR application development method provided in the embodiment of the present application;
FIG. 7b is a schematic diagram of the process of an XR application editing method provided in the embodiment of the present application;
FIG. 8 is a schematic diagram of the process of an XR application running method provided in the embodiment of the present application;
FIG. 9 is a schematic diagram of the structure of an electronic device provided in the embodiment of the present application.

### DETAIL DESCRIPTION OF THE EMBODIMENTS

To make the objectives, technical solutions, and advantages of this application clearer, the technical solutions of this application will be described in detail and comprehensively below in conjunction with specific embodiments and the accompanying drawings. It is evident that the described embodiments are merely a part of the embodiments of this application, rather than all of them. Based on the embodiments of this application, all other embodiments obtained by those of ordinary skill in the art without creative efforts fall within the scope of protection of this application.

It should be noted that the user information (including but not limited to user device information, personal information, etc.) and data (including but not limited to data for analysis, data for storage, data for display, etc.) involved in this application are all information and data authorized by the user or fully authorized by all parties. The collection, use, and processing of relevant data must comply with the relevant laws, regulations, and standards of the applicable countries and regions. Additionally, corresponding entry points for operation must be provided, allowing users to choose to grant or deny authorization.

With the widespread adoption of XR technology, existing technologies face challenges in XR application development, particularly before the large-scale proliferation of XR devices. In this period, XR applications primarily took the form of 3D scenes embedded in 2D applications. This meant that for a long time, XR application development was mainly focused on terminal development engineers. Terminal development engineers refer to engineers who develop 2D applications for mobile devices such as smartphones, including but not limited to: client-side engineers and front-end engineers.

To address the issue of XR application development, some application developers, including terminal development engineers, have attempted to use game engines for XR application development. A game engine is a framework used for the rapid development of games. Common game engines include but are not limited to: Unity, Unreal Engine (UE), etc. Game engines are designed for game development and are powerful, involving various functional modules such as rendering, physics, animation, and more. Based on a game engine, it is possible to develop complete and complex XR applications. However, there are still some shortcomings when using game engines to develop XR applications.

Firstly, terminal development engineers face significant challenges when transitioning to game development. These challenges include at least the following points:
(1) game engines have high requirements for terminal development engineers, requiring them to have a deep understanding of 3D graphics knowledge, which presents a significant barrier to entry;
(2) engineers need to become familiar with game engines. Game engines such as UE/Unity involve hundreds of header files and thousands of application programming interfaces (APIs), which can be difficult to master;
(3) the integrated development environments (IDEs) for game engines, such as UE Blueprints, Unity Editor, and other toolchains, are independently designed and differ significantly from the IDEs used in application development. Terminal development engineers may find it difficult to adapt to them in a short period of time.

Secondly, game engines are not designed for embedding apps, making it difficult to support the development of application forms that embed 3D scenes in 2D applications. This can lead to the following problems.
(1) A plurality of instances: the main feature of 2D applications is the switching between different pages, where pages are isolated from each other, supporting state cache recovery and backward navigation. Each page is an independent instance. However, game engines operate in a single-instance mode, lacking lifecycle management. After switching pages, resource recycling becomes difficult, leading to resource waste and memory resource limits being easily reached, potentially triggering app crashes.
(2) User interface (UI) interaction: the UI in 2D applications is rendered responsively, while the UI in game engines is rendered immediately. The different rendering mechanisms make it difficult to achieve smooth UI layouts and complex UI effects in applications developed with game engines.
(3) Interaction with 2D application software development kits (SDKs): due to the complexity of the architecture, game engines cannot integrate 2D application SDKs during the development of 3D scenes. As a result, the data communication between the 3D scene developed with the game engine and the 2D application can only rely on event-based methods, making the code implementation more complicated.

In view of the above, an embodiment of the present application provides an XR application development system for terminal devices. This development system includes a runtime container that can provide a runtime environment during both the XR application generation process (which can also be referred to as the XR application development process) and its running process, a content generator responsible for content generation, and an application generation platform responsible for packaging the application. The runtime container is integrated into the content generator, and based on the runtime environment provided by the runtime container, the application content of the XR application is generated. When generating the application content, the application generation platform, based on the application content and the runtime container, generates the XR application, which includes both the application content and the runtime container. During the runtime of the XR application developed based on the runtime container, the runtime container operates between the application content and the operating system, providing a runtime environment for the application content, enabling the application content to run within this environment. By introducing the runtime container between the application content and the operating system, the underlying device information can be shielded, eliminating the strong dependency between the application content and the operating system. This allows XR application development and runtime to be cross-platform and cross-device, making XR application development simpler and easier to implement, thus solving the issues of XR application development and cross-device operation.

Furthermore, by developing XR applications based on the runtime container, XR application development and operation can be cross-platform and cross-device. This enables terminal development engineers to develop XR applications in independent forms for XR devices, as well as XR applications primarily embedding 3D scenes in 2D applications. This approach satisfies the need for independent form XR applications for XR devices, as well as the demand for XR applications embedding 3D scenes in 2D applications for terminal devices. It resolves the pain points of cross-device issues (such as for smartphones, AR devices, VR devices) in the XR field, adapting to the development of XR technology.

Furthermore, the XR application development system for terminal devices provided in this embodiment of the present application pre-develops a runtime container capable of providing a runtime environment, and provides a content generator and an application generation platform. For developers, they only need to develop application content based on the runtime container and then use the application generation platform to package the application content and the runtime container into an XR application. This system offers advantages such as low entry barriers, parallel development, and comprehensive development support, with low requirements for developers. It is suitable not only for terminal development engineers but also for game engineers and other developers. Additionally, due to the presence of the runtime container, the development of XR applications becomes more focused and flexible. Developers can directly address various application requirements without being constrained by the limitations of game engines, overcoming the various defects and issues faced when developing XR applications based on game engines, and ultimately enabling the development of XR applications with features such as cross-device and cross-platform compatibility.

Furthermore, since the runtime environment is provided by the runtime container, this makes the development of application content relatively independent. The application content primarily includes 3D scene resource data and application logic code. In the specific implementation, the application code is written using dynamic languages such as JavaScript (JS). This approach enables the developed XR applications to have characteristics such as rapid iteration and high performance.

In the embodiments of the present application, the implementation form of the XR device is not limited and can be either an AR device or a VR device. AR devices include, but are not limited to, AR glasses, AR headsets, etc.; VR devices include, but are not limited to, VR glasses, VR headsets, etc. Correspondingly, terminal devices running 2D applications embedding 3D scenes may include, but are not limited to, smartphones, tablet computers, laptops, smart wristbands, and other devices.

The following embodiments of the present application will provide a detailed description of the XR application development system for terminal devices, as provided in the embodiments of the present application, in conjunction with the accompanying drawings.

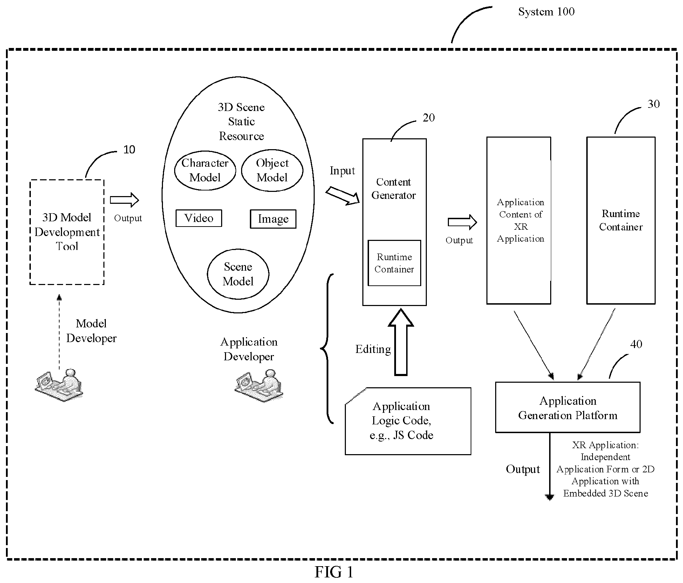

FIG. 1 is a schematic diagram of the structure of an XR application development system 100 for terminal devices, provided in the embodiment of the present application. As shown in FIG. 1, the system 100 includes: a content generator 20, a runtime container 30, and an application generation platform 40.

As shown in FIG. 1, the XR application development system 100 in this embodiment includes a runtime container 30. The runtime container 30 is a software stack that operates on top of the operating system, which is pre-developed and is not part of the operating system. This software stack is provided for XR application development and is necessary for developing XR applications. Its function is to provide the runtime environment during both the XR application development process and its runtime process. The runtime environment refers to the environment required for the execution of the developed XR application or intermediate program code during the XR application development process. For example, it includes the software engines, environment variables, and the runtime logic necessary to run the XR application or intermediate program code. In this embodiment, the term "software engine" is used in a broad sense, encompassing various engines, library functions, and similar components.

Based on the inclusion of the runtime container 30 in the XR application development system 100, the XR application development process in this embodiment includes two main processes: the development of the application content required for the XR application based on the runtime environment provided by the runtime container 30, and the generation of the XR application based on the runtime container and application content. The content generator 20 is responsible for generating the application content of the XR application based on the runtime environment provided by the runtime container 30. To enable the content generator 20 to use the runtime environment provided by the runtime container 30, the runtime container 30 is integrated into the content generator 20. In this embodiment, the development of the application content based on the runtime environment provided by the runtime container 30 ensures that the application content has the ability to run in the runtime environment provided by the runtime container 30. Moreover, it ensures that the application content's behavior during development is consistent with its behavior during runtime.

When the application content is generated, the application generation platform 40 is responsible for generating the XR application based on the runtime container 30 and the application content. In this embodiment, the XR application differs from traditional applications in that it includes both the application content and the runtime container 30 responsible for providing the runtime environment for the application content. Since the application content is developed based on the runtime environment provided by the runtime container 30, it is capable of running within the runtime environment provided by the runtime container 30. Based on this, the runtime container 30 and the application content are integrated together to form the XR application. During the XR application's runtime, the runtime container 30 operates between the application content and the operating system of the target device where the XR application is located, providing the runtime environment for the application content, ensuring that the application content runs within the runtime environment provided by the runtime container, and ultimately allowing the XR application to run correctly. The target device where the XR application runs can either be an XR device or a terminal device running a host 2D application, with no specific limitations on this.

In this embodiment, the runtime container 30 operates on top of the operating system of the target device where the XR application is located, utilizing the operating system to provide the runtime environment for the application content of the XR application. Specifically, this means that the operating system of the target device is used to leverage various software and hardware resources of the target device, such as CPU, GPU, memory, network card, bandwidth, and other resources, to provide the necessary runtime environment for the XR application's application content. This enables the application content to run within the runtime environment, thereby presenting a 3D scene and interaction and/or control based on the 3D scene to the user.

In this embodiment, the implementation form of the XR application can either be an independent application form or an application form primarily embedding 3D scenes within a 2D application. Depending on the different implementation forms of the XR application, the way the application generation platform 40 generates the XR application may vary. The role of the application generation platform 40 is to package the runtime container 30 into the corresponding installation package based on the XR application's implementation form, so that the target device can install and run the runtime container 30 locally using the corresponding installation package.

If the XR application is in an independent application form, the application generation platform 40 can integrate the runtime container 30 and the application content into the installation package of the XR application and release the installation package. This allows the XR application to be downloaded, installed, and run like other independent application forms. Specifically, the XR application can be an AR application running on AR devices or a VR application running on VR devices, with no specific limitations on this.

If the XR application takes the form of a 2D application embedding a 3D scene, the 2D application that needs to embed the 3D scene is referred to as the host 2D application. The application generation platform 40 can integrate the runtime container 30 into the installation package of the host 2D application and release the installation package of the host 2D application. This allows the runtime container 30 to be downloaded, installed, and run along with the host 2D application, just like other independent application forms. The application content of the XR application can either be independently released, separate from the host 2D application, or it can be embedded into the installation package of the host 2D application and released together with the installation package. There is no specific limitation on this. Alternatively, considering that the data volume of the XR application's application content may be large, the application content can be separately published to the resource server corresponding to the host 2D application. In this case, during the runtime of the host 2D application, when the 3D scene provided by the XR application needs to be rendered, the application content can be downloaded on demand from the resource server and run in the runtime environment provided by the runtime container 30, thereby presenting the 3D scene within the page of the host 2D application. The 3D scene would then be embedded into a specific page of the host 2D application.

It should be noted that the embodiments of this application do not impose limitations on the host 2D application, which can be any 2D application with the need to display 3D scenes. For example, it can be an e-commerce application, entertainment application, educational application, medical application, or other types of applications.

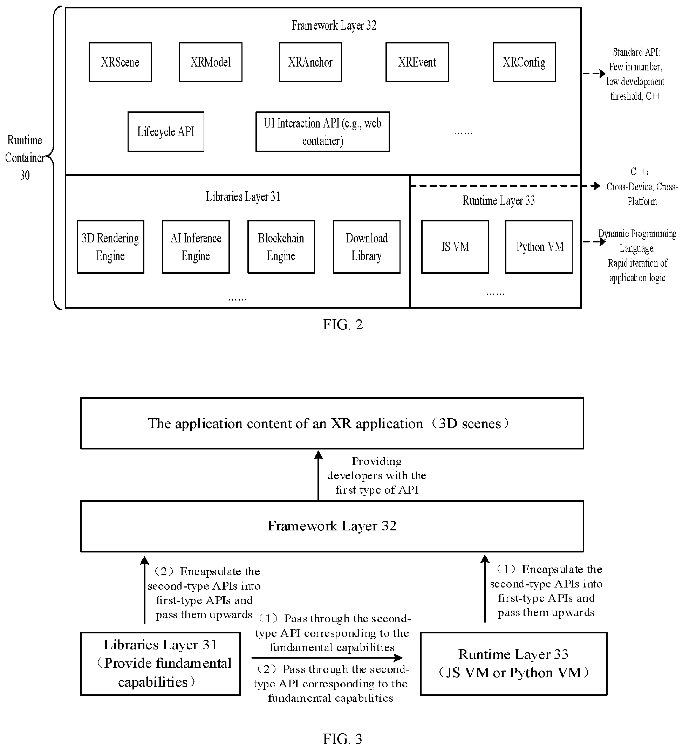

The runtime container 30 in this embodiment is a provider of a runtime environment that operates on top of the operating system. Whether during the XR application development process or the XR application running process, the way the runtime container 30 provides the runtime environment is the same or similar. As shown in FIG. 2, the runtime container 30 provided in this embodiment includes an implementation architecture with the following layers: a Libraries layer 31, a framework layer 32, and a runtime layer 33. The following sections provide an explanation of each of the three layers.

Libraries layer 31: containing a series of basic libraries required for the XR application. These libraries provide various software engines and/or library functions, including but not limited to: 3D rendering engines, AI inference engines, download functionality engines or library functions provided by download libraries, storage functionality engines or library functions provided by storage libraries, network functionality engines or library functions provided by network libraries, configuration functionality engines or library functions provided by configuration libraries, blockchain engines, event functionality engines or library functions provided by event libraries, 2D UI engines, and event engines, among others. Furthermore, depending on the type of downloadable content, the download library can be divided into image libraries, video libraries, etc. These software engines are responsible for providing the basic capabilities required by the XR application for its operation, such as 3D scene rendering capabilities, inference capabilities for neural network models, resource download capabilities, storage capabilities, network communication capabilities, configuration capabilities, and more. The following descriptions of various engines and software libraries are provided for illustrative purposes and are not limited to the examples mentioned here.

3D rendering engine: being responsible for providing capabilities such as 3D rendering, animation, and physics simulation. For example, it may include but is not limited to: AceNNR.

AI inference engine: being responsible for providing the edge-side inference capabilities for deep neural network models. For example, it can be MNN.

Blockchain engine: being responsible for providing blockchain services.

Network library: providing efficient network transmission capabilities between the edge side (mainly referring to the target device where the XR application is located) and the cloud side (mainly referring to the cloud server corresponding to the XR application).

Download library: based on the network library and combined with the download library packaged on the cloud side, providing capabilities for downloading various resources from the cloud side and managing resource caching.

Image library: based on the network library and combined with the image download library packaged on the cloud side, supporting the download of images in various compressed formats and provides a local image caching mechanism.

Video library: based on the network library and combined with the video download library packaged on the cloud server, supporting the download of videos in various formats and provides a local video caching mechanism.

Event tracking library: being responsible for providing log tracking services, which include compressing the log data generated during the running of XR application on the device side and uploading it to the cloud side.

Storage library: providing file storage services. If the storage library is a relational database, it offers relational storage services. If the database is a time-series database, it provides time-series storage services, and so on.

Configuration library: being responsible for providing various configuration functionalities for the 3D models, coordinates, events, and other elements in the XR application.

In this embodiment, the basic capabilities provided by the various software engines mentioned above can be encapsulated into APIs. These APIs expose the basic capabilities to the outside and are referred to as basic APIs. Relative to the first type of API, these basic APIs can also be referred to as second-type APIs. The first type of API is a set of APIs exposed to application developer to allow them to write application logic code. The second-type APIs do not need to be exposed to application developer. The first type of API is encapsulated based on the second-type APIs, and each function entity of the first type of API may include one or more second-type APIs, with no specific limitation on this. Application developer write application logic code based on the first type of API. During the runtime of the XR application, when these application logic codes are executed, they first trigger the invocation of the first type of API, which in turn triggers the invocation of the second-type API encapsulated within the first type of API. This then triggers the invocation of the corresponding software engine, thereby utilizing the basic capabilities provided by the software engine to achieve the rendering of the 3D scene and other functionalities.

Framework layer 32: providing the necessary capabilities for XR application development and mainly exposes the first type of API to application developers. The specific implementation of most of the first type of API is provided by the software engines in the libraries layer. Depending on the application scenario, the number and type of first type of APIs provided by the framework layer may vary. Below are a few exemplary first type APIs.
(1) 3D scene API: being used for 3D scene development and primarily encapsulates the 3D rendering capabilities of the 3D rendering engine in the libraries layer. This allows application developers to avoid dealing directly with the 3D rendering engine, which, to some extent, reduces the barrier for developers to understand and develop XR applications.
   The 3D scene API includes a plurality of APIs. Below are a few examples of 3D scene APIs:
   XRScene: representing a 3D scene; this API allows the creation of a 3D scene;
   XRModel: representing a 3D model; this API allows the creation of a 3D model within the 3D scene;
   XRAnchor: representing a reference coordinate within the 3D world; this API allows the positioning and calibration of locations within the 3D scene;
   XREvent: representing events related to the system and application; this API allows the handling of various events within the 3D scene and triggering appropriate responses;
   XRConfig: representing the configuration of the XR application. This API allows various configurations of the XR application, such as setting different resource loading and runtime strategies for high, medium, and low-end devices. It can also configure the resolution, hierarchy, type, and other attributes of 3D models or other objects within the 3D scene.
(2) Lifecycle management API: being responsible for managing the lifecycle of the XR application, including but not limited to the start, exit, update, and other lifecycle events of the XR application. This type of API primarily encapsulates the lifecycle management capabilities of the lifecycle management engine in the libraries layer.
(3) Resource management API: being responsible for managing various resources required by the XR application, including but not limited to downloading, caching, and storing resources. This type of API primarily encapsulates the download capabilities and storage capabilities provided by the download engine and storage engine in the libraries layer.
(4) UI interaction API: being used in the application form where a 3D scene is embedded within a 2D application. It is responsible for managing the UI interaction between the XR application and its host 2D application, and supports displaying frontend pages developed in W3C standards. The UI interaction API can be implemented as a web container, which handles the display functionality of the visual UI in the XR application related to the host 2D application. It acts as a physical container, providing the GUI of the 2D application. Alternatively, it can be implemented as a Native container, which is a virtualized container. This API primarily encapsulates the UI interaction capabilities provided by the 2D UI engine in the libraries layer.
(5) Event interaction API: being responsible for managing event interactions within the XR application, including but not limited to various event behaviors such as click, long press, zoom, rotation, proximity, and others. This type of API primarily encapsulates the event management and response capabilities provided by the event engine in the libraries layer.

In addition to exposing the first type of API to application developers, the framework layer 32 also contains some logical functions. For example, during the XR application generation process or running process, it is responsible for perceiving target events. Target events refer to events that involve the invocation of at least one first type of API. Based on the operational logic between at least one first type of API, the framework layer runs the function entities of at least one first type of API and provides the target APIs encapsulated in the function entities to the runtime environment layer 33. Here, the target APIs are the second type of APIs encapsulated within the function entities of the first type of APIs. For different first type APIs, the functionalities they implement are generally different, and therefore, the second-type APIs encapsulated in their function entities will also vary. There is no specific limitation on this.

Runtime environment layer 33: being responsible for providing a runtime virtual machine (VM) that is compatible with the programming language used in the XR application. These runtime VMs provide the runtime environment for the XR application. Specifically, they are used to respond to the target events perceived by the framework layer 32, by invoking the corresponding software engines in the libraries layer based on the target APIs provided by the framework layer 32. This process ensures the execution of intermediate resource data during the XR application development process or the execution of application content within the XR application.

The VM compatible with the programming language used in the XR application can be a JS VM or a Python VM. If the XR application's application logic code is written in JavaScript, a JS VM is provided; if the application logic code is written in Python, a Python VM is provided. It should be noted that these runtime VMs provide the runtime environment for the XR application. On one hand, they utilize the operating system of the target device to access the software and hardware resources of the device, providing the necessary resources for the XR application. On the other hand, based on these hardware and software resources, the VMs invoke the basic capabilities provided by the corresponding software engines in the libraries layer to render 3D scene resource data, interpret and execute application logic code, and allow the XR application to utilize various basic capabilities from the libraries layer. Ultimately, this process enables the presentation of 3D scenes to the user and supports interaction and/or control based on the 3D scenes.

JS VM: mainly supporting application developers (such as terminal development engineers) in writing JS application logic code, dynamically delivering it, and interpreting and executing it through the JS VM to achieve dynamic updates of the XR application logic. For example, it can handle the dynamic updates of the 3D scene's UI interface, interaction logic, and other elements.

Python VM: primarily supporting application developers (such as terminal development engineers) in writing Python application logic code, dynamically delivering it, and interpreting and executing it through the Python VM to achieve dynamic updates of the Python-written application code (e.g., a specific algorithm task). For example, in an AR scene, application logic code can be written in Python, such as developing a facial recognition algorithm task within an AR application.

It should be noted that in the embodiments of this application, there is no limitation on the number of runtime VMs included in the runtime environment layer 33. The number of runtime VMs can be one or more. For example, there may be a standalone JS VM or Python VM, or both a JS VM and a Python VM may coexist. When a plurality of runtime VMs are present, different runtime VMs are implemented using different dynamic programming languages, and they provide runtime environments for XR applications implemented using those different dynamic programming languages.

Furthermore, when a plurality of runtime VMs are present, the runtime environment layer 33 also includes a VM Scheduling Module. The VM scheduling module is responsible for selecting the target VM from the plurality of runtime VMs based on the dynamic programming language used by the XR application during runtime. This ensures that the selected target VM provides the runtime environment for the XR application. Additionally, the VM scheduling module is also responsible for, during the XR application development process, selecting the target VM from the plurality of runtime VMs that matches the dynamic programming language used in the development of the XR application. This allows the target VM to provide the runtime environment for the intermediate resource data during the XR application development process.

In this embodiment, there is a relationship between the three layers of the runtime container 30, as shown in FIG. 3. The libraries layer 31 is at the bottom, and the runtime environment layer 33 is positioned between the libraries layer 31 and the framework layer 32. The libraries layer 31 is responsible for providing various basic capabilities, with different software engines offering different capabilities. For example, the 3D rendering engine provides 3D rendering capabilities, and the AI inference engine provides AI model inference capabilities based on deep neural networks. These basic capabilities are encapsulated into different second-type APIs to expose these capabilities. On one hand, the second-type APIs are exposed to the runtime environment layer 33, and on the other hand, they are further encapsulated into first-type APIs, which are passed through the framework layer 32 to be exposed to application developers. For the framework layer 32, during the XR application development process or runtime, it can perceive target events that trigger the invocation of the first-type API. These target events could include events triggered during the running of XR application, such as an event that triggers the running of the XR application. In the XR application development process, these events could also include events like loading static 3D scene resources, triggering the viewing of 3D scene effects after adding dynamic 3D scene information, or triggering interactive effects after adding application logic code. These target events will trigger at least one first-type API call, executing the function entities contained within the first-type API. When the second-type APIs encapsulated in these function entities are reached, they are provided to the runtime environment layer 33. For the runtime environment layer 33, during the XR application development process or runtime, it will receive the second-type APIs provided by the framework layer 32 and, through these second-type APIs, call the basic capabilities provided by the software engines in the libraries layer 31. For events like loading 3D scene static resources, viewing 3D scene effects after adding dynamic information, and triggering interactive effects after adding application code, further descriptions will be provided below.

In this embodiment, various basic capabilities in the libraries layer can be implemented using C++. C++ is a cross-platform language, and by implementing the various basic capabilities in the libraries layer with C++, XR applications developed using the runtime environment provided by this runtime container will have cross-platform and cross-device characteristics.

In this embodiment, when the various basic capabilities in the libraries layer are implemented using C++, the exposure of these capabilities can be done in several ways, including but not limited to the following methods:
first method: native exposure, which requires the application logic code in the XR application to be developed using C++; this exposure method does not support rapid iteration capabilities;
second method: non-native exposure, which allows the application logic code in the XR application to be written using languages such as JS or Python; by leveraging the advantages of JS or Python, dynamic updates and iterations of the application logic can be achieved.

Furthermore, in the case of using the non-native exposure method, as shown in FIG. 3, the exposure of APIs can be achieved through the following two methods.
(1) In the libraries layer, the second-type APIs are exposed to the JS VM or Python VM in the runtime environment layer through JS binding or Python binding technology. The JS VM or Python VM then encapsulates the second-type APIs into first-type APIs, and these first-type APIs are subsequently exposed to the framework layer.
(2) In the libraries layer, the second-type APIs are exposed to the JS VM or Python VM in the runtime environment layer through JS binding or Python binding technology, and the second-type APIs are encapsulated into first-type APIs, which are then directly exposed from the libraries layer to the framework layer.

In the embodiments of this application, the application content of the XR application primarily includes 3D scene resource data and application logic code. The 3D scene resource data refers to the resource data responsible for presenting the 3D scene, such as: 3D scene static resources, which refer to static resources within the 3D scene, such as various 3D models, images, etc.; and 3D scene dynamic information, which refers to dynamic information related to the 3D scene effects, such as the movement trajectory of 3D models, the camera system in the 3D scene, water systems in the 3D scene, etc. This dynamic information enhances the richness and diversity of the 3D scene effects. The application logic code data includes various code data reflecting the application logic. These logic elements involve controlling and interacting with various resources in the 3D scene at the application layer, such as: controlling the movement of character models, interaction control with character or object models, and triggering special effects when certain conditions are met, among other things.

In an alternative embodiment, 3D scene static resources are pre-generated. Based on these, 3D scene dynamic information and application logic code are edited on the 3D scene static resources to obtain the application content of the XR application. Based on this, one way the content generator 20 generates the application content includes: responding to the XR application generation operation, loading the 3D scene static resources, and based on the runtime environment provided by the runtime container 30, adding 3D scene dynamic information and application logic code to the 3D static scene resources, thereby obtaining the application content of the XR application.

The application logic code can be written by the application developers based on the first-type APIs provided to them through the framework layer of the runtime container 30.

In an alternative embodiment, as shown in FIG. 1, the XR application development system 100 provided in this embodiment also includes a 3D model development tool 10, which is aimed at model developers. This tool allows model developers to utilize the 3D model development tool 10 to create the 3D scene static resources required for generating the XR application. Specifically, the 3D model development tool 10 can respond to the 3D model development operations of model developers, generate various 3D models, and output these models as at least part of the 3D scene static resources.

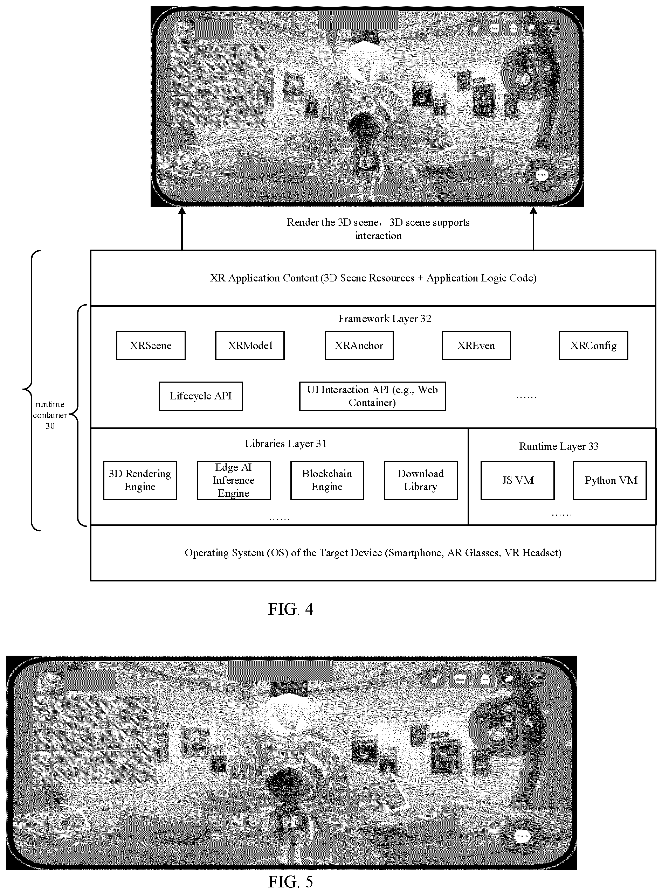

The 3D scene static resources include various static resources required for constructing the 3D scene in the XR application. These resources include, but are not limited to the following 4 types.
(1) 3D model files, which are used to describe the 3D models. Depending on the application requirements, 3D models can be categorized in different ways for different application scenarios. For example, in the XR scene shown in FIG. 5, 3D models can be divided into, but are not limited to, three main categories: characters, objects, and scenes. This means that the characters, shoes, bags, etc., shown in FIG. 5 are all considered 3D models, and the entire 3D scene is also a 3D model. In this embodiment, the format of the 3D models is not limited, and they can be in formats such as, but not limited to: FBX, OBJ, GLTF, etc.
(2) Image resources, which refer to images that need to be presented at certain positions within the 3D scene.
(3) Video resources, which refer to video content that needs to be displayed at certain positions within the 3D scene.
(4) Audio resources, which refer to audio content that needs to be played at specific locations within the 3D scene.

It should be noted that the aforementioned 3D model files are required resources, while image resources, video resources, and audio resources are optional, and their inclusion depends on the specific application scenario.

In this embodiment, the implementation of the 3D model development tool 10 is not limited. Any development tool that can provide 3D model code editing, code compilation, debugging features, and graphical user interface (GUI) capabilities is suitable for use in this embodiment. For example, plugins can be written using Android Studio or XCode, or a self-developed Integrated Development Environment (IDE) specifically designed for XR application development can be used. This self-developed IDE needs to have the following features: 3D model code editing, code compilation, debugging capabilities, and a graphical user interface, among others.

After obtaining the 3D scene static resources required for developing the XR application, the content generator 20 can be used to add 3D scene dynamic information and application logic code to these static resources to obtain the application content of the XR application. The application content of the XR application can also be referred to as the resource package of the XR application.

In this embodiment, as shown in FIG. 1, one input to the content generator 20 is the 3D scene static resources. Based on the runtime environment provided by the runtime container 30, the content generator adds 3D scene dynamic information to the 3D scene static resources to obtain 3D scene resource data that includes both the 3D scene static resources and the 3D scene dynamic information. Furthermore, as shown in FIG. 1, another input to the content generator 20 is the application logic code. Based on the runtime environment provided by the runtime container 30, the application logic code is added to the 3D scene resource data, ultimately generating the application content of the XR application.

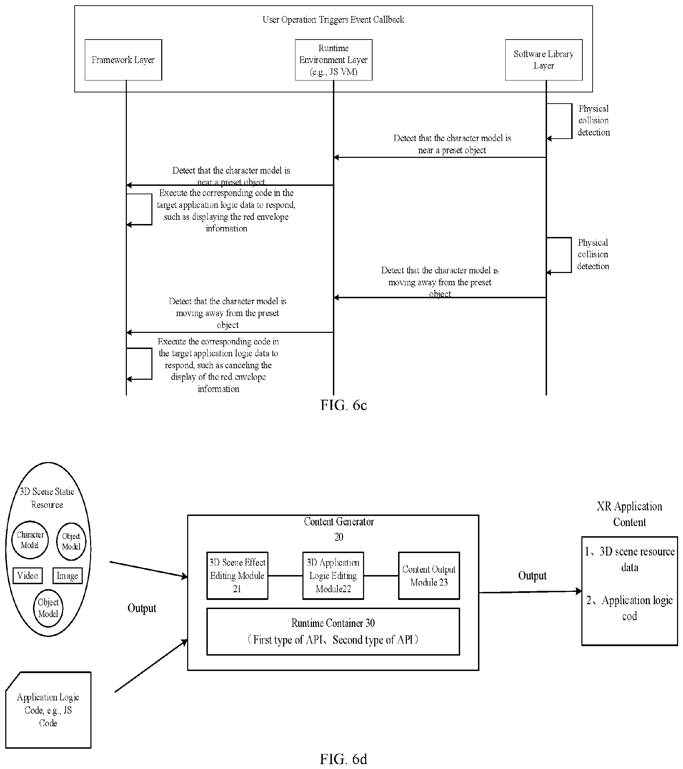

In this embodiment, the internal implementation architecture of the content generator 20 is not limited. As shown in FIG. 6d, one implementation structure of the content generator 20 includes the following components: 3D scene effect editing module 21, 3D application logic editing module 22, content output module 23, and runtime container 30. In terms of the hierarchical architecture, the 3D scene effect editing module 21 and the 3D application logic editing module 22 are positioned above the runtime container 30, and they require the runtime container 30 to provide the runtime environment for their operation.

The 3D scene effect editing module 21 is used to respond to XR application generation operations, loading the 3D scene static resources. Based on the runtime environment provided by the runtime container 30, it edits the 3D scene dynamic information for the 3D scene static resources to obtain the 3D scene resource data.

The 3D application logic editing module 22 is communicatively connected to the 3D scene effect editing module 21. It is responsible for loading the 3D scene resource data and, based on the runtime environment provided by the runtime container 30, editing the application logic code for the 3D scene resource data to obtain the application content of the XR application.

The content output module 23 is communicatively connected to the 3D application logic editing module 22. It is responsible for outputting the XR application's application content to the application generation platform 40, allowing the platform to generate the XR application based on the application content and the runtime container 30. The application content of the XR application includes 3D scene resource data and application logic code. The 3D scene resource data includes, but is not limited to: the organizational description file of the 3D scene, mesh data, material data, texture data, video data, and other related information. Specifically, the 3D scene organizational description file includes, but is not limited to: 3D scene organization, lighting settings, rendering settings, camera movements, physical collisions, etc. Material data includes, but is not limited to: glass materials, metal materials, and other similar information. The application logic code data can be written in languages such as JS (JavaScript), and may be represented as xxx.js.

During the application content generation process, the role of the runtime container 30 is to provide a runtime environment for the intermediate data generated during the XR application generation process. This allows the intermediate data to present its runtime effects. Based on these effects, it is determined whether adjustments to the 3D scene dynamic information or application logic code are necessary, ultimately resulting in application content that achieves the required runtime effects.

The 3D scene effect editing module 21 is specifically responsible for the following tasks: responding to the loading operation of the 3D scene static resources by starting the runtime container 30, running the 3D scene static resources within the runtime environment provided by the runtime container 30 to produce a static 3D scene; responding to editing operations on the static 3D scene by editing the 3D scene dynamic information to obtain the first intermediate resource data; responding to scene effect viewing operations by re-invoking the runtime container 30. It runs the first intermediate resource data within the runtime environment provided by the runtime container 30 to generate the first intermediate 3D scene; when the first intermediate 3D scene does not achieve the desired scene effects, adjusting the 3D scene dynamic information to satisfy the scene effects and ultimately obtaining the updated 3D scene resource data.

Optionally, the 3D scene effect editing module 21 is used for the following tasks: responding to the project creation operation by creating a project and naming it, for example, the 3D scene could be used as the project name, such as "AAA;" responding to the import operation of 3D scene static resources by importing 3D scene static resources, which include, but are not limited to, various 3D models, etc.; starting the runtime container 30 and running the 3D scene static resources within the runtime environment provided by the runtime container 30, displaying the static 3D scene on the interactive interface, with the 3D models shown in the static 3D scene. In this embodiment, the content generator provides an interactive interface. The interface is a 3D interface with three coordinate axes: x, y, and z. Preferably, the 3D scene itself is a 3D model, and when displaying this 3D scene, the center of the scene is positioned at the origin of the xz plane on the editing interface, with the ground plane having a y value of 0. Further, based on this, the 3D scene effect editing module 21 edits dynamic information for these 3D models, ultimately obtaining the desired target 3D scene resource data.

In this embodiment, the content generator 20 provides an interactive interface that can also display the first intermediate 3D scene. Further, in response to editing operations on the 3D static scene, the 3D scene dynamic information is edited, including: displaying editing controls on the 3D static scene, showing a dynamic information editing interface, which displays various editable information items, when a trigger operation is performed on these editing controls; responding to configuration operations on these information items, obtaining the configuration data for these items as the 3D scene dynamic information, which is then combined with the 3D scene static resources to form the 3D scene resource data.

Depending on the XR application scenario, the interface form of the dynamic information editing interface and the information items displayed may vary, and no specific limitations are imposed on this. Some examples of information items are as follows: for example, an information item for configuring trigger actions, where the trigger methods may include but are not limited to: swipe trigger, long press trigger, drag trigger, and a plurality of clicks trigger; another example includes an information item for configuring the display effects of 3D models, where the display methods may include but are not limited to: animation, sound effects, entry effects, etc.; yet another example includes an information item for configuring the end state of the 3D model, where the end states may include but are not limited to: hiding at the end, closing at the end, loop playback, etc. In addition, depending on the application scenario, dynamic information related to 3D scene static resources can also be edited, such as camera control, lighting control, water system control, scene placement, pathfinding system, and other related dynamic information.

Below are exemplary explanations of the process for editing several types of 3D scene dynamic information for 3D scene static resources.
(1) Camera control: in response to the camera control editing operation for the 3D model, camera control information related to the 3D model is edited to provide rich camera control capabilities within the 3D scene. The camera control information for the 3D model includes, but is not limited to: control information to switch the 3D model between different viewpoints. Control information to move the 3D model along a preset camera path. Control information to make the 3D model follow the movement of another 3D model or other scene objects. Thus, when the 3D scene is rendered, and when these camera control instructions are encountered, the 3D rendering engine can execute the camera control information to switch the 3D model between different views, move it along the preset path, or make it follow other models or objects in the scene, and so on.
(2) Lighting control: the 3D rendering engine provided by the runtime container 30 supports both real-time lighting and baked lighting. Real-time lighting supports directional light sources, while baked lighting supports directional light, point light sources, spotlight sources, and area light sources. In response to the lighting control editing operation for the 3D model, lighting control information related to the 3D model is edited. For example, the light source type for the 3D model is selected, and parameters such as the light source color, illumination angle, illumination range, and intensity are edited. This enables the rendering of the desired lighting effects for the 3D model within the 3D scene.
(3) Water control: the 3D rendering engine provided by the runtime container 30 supports water materials. By using water materials on flat meshes, quick water surface rendering effects can be achieved. To use water materials, shaders graphs or water shaders can be selected under the material options. In this embodiment, the parameters involved in the water material include, but are not limited to: deep color: color of deep water; shallow color: color of shallow water; strength: currently unused; smoothness: smoothness of the water surface; displacement: range of wave movement; normal strength: intensity of the wave normals; normal tiling: tiling coefficient for wave normal textures. In response to the water control editing operation for the 3D model, water control information related to the 3D model is edited. For example, the water shader is selected for the 3D model, and parameters such as water color, smoothness, wave movement range, and wave normal intensity are edited. This enables the rendering of the desired water surface effects for the 3D model within the 3D scene.
(4) Scene placement editing: in the 3D scene, placement information is required for various objects, such as the placement of 3D models, cameras, images, videos, or other objects for use by the application layer. The specific locations in the 3D scene where placement information should be set depend on the product requirements document (PRD) for the application. Examples include: image placement: used to mark the location where an image should be placed within the 3D scene. video placement: configured to mark the location where a video should be placed within the 3D scene. red envelope placement: configured to mark the location where a red envelope should be displayed within the 3D scene. camera placement: a plurality of camera placements can be defined within the 3D scene, allowing for camera view switching during runtime. 3D model placement: configured to mark the location of corresponding 3D models within the 3D scene. This allows for operations such as moving, rotating, and scaling models, and supports future updates to the 3D models. clickable area placement: 3D models in the 3D scene can have clickable components added, marking areas outside the 3D models that can be clicked, as well as positions for collision detection within the 3D scene. In response to placement editing operations on the 3D scene, placement information relevant to the 3D scene is edited. For example, the placement of 3D models, images, videos, red envelopes, cameras, and clickable areas within the 3D scene is set. This ensures that objects such as 3D models, images, videos, and red envelopes are displayed in appropriate locations within the 3D scene, and enables camera view switching on 3D models based on camera placements, as well as rendering effects.
(5) Pathfinding system editing: based on the 3D scene map, three different types of areas are defined: 1) walkable: indicating that the current area allows specific model objects (e.g., character models) to move across it, such as the ground surface; 2) not walkable: indicating obstacles (e.g., walls) where specific model objects cannot pass through; 3) jump: indicating that the current area allows specific model objects to jump over it, such as thresholds or ditches. In response to pathfinding editing operations on the 3D scene, relevant pathfinding information for the 3D scene is edited. For example, areas where specific model objects are allowed to pass, areas where they are not allowed to pass, or areas that can be jumped over are set. This enables the presentation of pathfinding rendering effects for specific model objects within the 3D scene.

It should be noted that during the process of editing the 3D scene static resources, the 3D scene effect editing module 21 in the content generator 20 can start the runtime container 30. In the runtime environment provided by the runtime container 30, the first intermediate resource data, which includes the added dynamic information, is executed. For example, the 3D rendering engine provided by the runtime container 30 can be invoked to render the first intermediate resource data to obtain the first intermediate 3D scene. Based on the rendering effects of the first intermediate 3D scene, the dynamic information is continuously adjusted until the desired rendering effects are achieved. The dynamic information at this point is considered the final dynamic information, which is then combined with the 3D scene static resources to form the 3D scene resource data in the application content.

In an optional embodiment, the dynamic information editing interface can be independent of the interface presenting the 3D static scene, or it can be embedded within the interface displaying the 3D static scene-there is no specific limitation on this. Regardless of the interface form, refresh controls or effect viewing controls can be set on either the dynamic information editing interface or the interface presenting the 3D static scene. Application developers can initiate operations to view the 3D scene effects after adding the dynamic information by clicking or long pressing these controls. In response to the scene effect viewing operation, the 3D scene effect editing module 21 can re-invoke the runtime container 30. The runtime environment provided by the runtime container 30 will run the first intermediate resource data to obtain the first intermediate 3D scene. This first intermediate 3D scene reflects the 3D scene effects after adding the dynamic information to the 3D scene static resources.

In this embodiment, the application developer can manually assess whether the first intermediate 3D scene achieves the desired scene effects. If the first intermediate 3D scene does not achieve the expected scene effects, the developer can adjust the 3D scene dynamic information and regenerate the first intermediate resource data. The regenerated first intermediate resource data is then executed in the runtime environment provided by the runtime container 30, continuing this process until the first intermediate 3D scene achieves the required scene effects. At that point, the 3D scene dynamic information, combined with the 3D scene static resources, forms the final 3D scene resource data. Alternatively, a functional module or component can be generated to automatically perform scene effect recognition and judgment. This module or component would automatically capture the state of the first intermediate 3D scene, and based on the scene state, determine whether the first intermediate 3D scene satisfies the desired scene effects.

The 3D application logic editing module 22 is specifically responsible for the following tasks: responding to the loading operation of the 3D scene resource data by starting the runtime container 30, running the 3D scene resource data within the runtime environment provided by the runtime container 30 to generate the first intermediate 3D scene; responding to the application logic code editing operation by generating the second intermediate resource data based on the 3D scene resource data and the application logic code, re-invoking the runtime container 30, running the second intermediate resource data within the runtime environment provided by the runtime container 30, which produces the second intermediate 3D scene; if the second intermediate 3D scene does not achieve the required interactive effects, the application logic code is adjusted to satisfy the interaction effects, to obtain the final application content of the XR application.

In this embodiment, the runtime effects of the second intermediate resource data, i.e., the effects of the application logic code running within the 3D scene, are divided into two categories: one is scene control, and the other is scene interaction.

Scene control involves controlling the 3D models within the 3D scene based on user input. This means that the application logic code has the ability to respond to user input and control the 3D models in the 3D scene accordingly. The methods for controlling the 3D models are not limited; for example, the 3D models can be controlled to move, jump, or switch camera perspectives, among other actions. For instance, in the scene shown in FIG. 5, the character model can be controlled to move based on user input through a joystick (which is one example of user input). The new position of the character model can be calculated based on the user input, such as a new world coordinate [0.15, 0.22, 0.31]. The character model would then move from its original position to the new position. It should be noted that the method of user input varies depending on the target device used to display the 3D scene. For example, if the target device is a mobile terminal like a smartphone, user input could be via gestures, voice commands, or touch. If the target device is a VR or AR device, input could be through buttons on a controller or through positional tracking (e.g., using hand or body movements). Taking touch input as an example, it could involve actions such as tapping, long-pressing, or double-tapping on the 3D scene interface. It can also involve triggering operations on certain controls within the 3D scene.

Scene interaction refers to triggering various response events or interaction information based on user input or the 3D models manipulated by the user. This means that the application logic code has the capability to respond to user input or monitor the state of 3D models controlled by the user, triggering response events or interaction information based on user input or the state of the 3D models. For example: the user clicks on a 3D model, controlling the 3D model to either show or hide, or to display related special effects. When the user manipulates a 3D model to approach a certain area or object, interactive information such as a red envelope or other types of interaction can be displayed in the 3D scene.

Based on the above, when the second intermediate 3D scene does not achieve the required interaction effects, examples of adjusting the application logic code include, but are not limited to: if the position of the 3D model is not ideal, the application logic code is modified to adjust the position where the 3D model interacts, or to change the type of trigger action for interacting with the 3D model; if the display of red envelope information in the 3D scene does not meet the application requirements, the red envelope information in the application logic code is modified to, for example, display card-flipping information, etc. This process continues until the application logic code achieves the desired interaction effects. At this point, the application logic code, combined with the 3D scene resource data, forms the application content of the XR application.

In this embodiment, the content generator 20 provides an interactive interface, which can display both the first intermediate 3D scene and the second intermediate 3D scene on the interface. Similarly, regarding the method of identifying whether the second intermediate 3D scene achieves the required interaction effects, it can refer to the previously mentioned method for identifying whether the first intermediate 3D scene achieves the scene effects, and will not be repeated here.

In this embodiment, the application logic code is pre-written by the application developers. In addition to providing the runtime environment, the runtime container in this embodiment can also offer APIs necessary for developing XR applications. To facilitate description and differentiation, these APIs exposed to the application developers are referred to as first-type APIs. Application developers can use these first-type APIs to write the application logic code required for the XR application. The first-type APIs are encapsulations of the second-type APIs. The second-type APIs are the APIs provided by the software engines within the runtime container 30. Through these second-type APIs, the software engines can be invoked to provide intermediate resource data or the runtime environment required for the XR application. Since the first-type APIs are encapsulations of the second-type APIs, their number is much smaller than that of the second-type APIs, and the first-type APIs are more concrete and easier to understand. This makes it simpler and more efficient for application developers to write the application logic code, thereby reducing the difficulty of developing XR applications.

It should be noted that depending on the implementation architecture of the runtime container 30, the method for running the above-mentioned 3D scene static resources, 3D scene resource data, first intermediate resource data, and second intermediate resource data in the runtime environment provided by the runtime container 30 may vary. Below, we will provide a detailed explanation based on the implementation architecture of the runtime container 30, as shown in FIG. 2.

During the process of editing the 3D scene dynamic information:
the 3D scene effect editing module 21 responds to the loading operation of the 3D scene static resources by starting the runtime container 30. Once the runtime container 30 is started, the framework layer detects the loading event of the 3D scene static resources. This loading event serves as a specific example of the aforementioned target event. The event is associated with at least one first-type API, such as but not limited to: 3D scene API, lifecycle management API, and resource management API; then, based on the logical relationships between these APIs, the function entities of these APIs are executed. The function entities contain second-type APIs, such as: the function entity of the 3D scene API encapsulates the second-type API corresponding to the 3D rendering engine. The function entity of the lifecycle management API encapsulates the second-type API corresponding to the lifecycle management engine. The function entity of the resource management API encapsulates the second-type API corresponding to the resource management engine. These second-type APIs, encapsulated in the function entities, are referred to as target APIs. When any target API is executed, the framework layer provides the target API to the runtime environment layer. The runtime environment layer then responds to the loading event of the 3D scene static resources by invoking the corresponding software engine via the target API. For example, the runtime environment layer invokes the 3D rendering engine to render the 3D scene static resources to obtain the 3D static scene. Additionally, the lifecycle management engine is called to manage the lifecycle of the 3D static scene, such as displaying and closing the scene. Furthermore, the resource management engine is invoked to manage the 3D scene static resources, such as storing or caching them locally.

The 3D scene effect editing module 21 responds to the scene effect viewing trigger operation by re-invoking the runtime container 30. After the runtime container 30 is re-invoked, the framework layer detects the event for viewing the 3D scene effects after adding the 3D scene dynamic information. This event is a specific example of the aforementioned target event, which corresponds to at least one first-type API, such as but not limited to: 3D scene API, lifecycle management API, and resource management API. Then, based on the logical relationships between these APIs, the function entities of these APIs are executed. The function entities contain second-type APIs, such as: the function entity of the 3D scene API encapsulates the second-type API corresponding to the 3D rendering engine. The function entity of the lifecycle management API encapsulates the second-type API corresponding to the lifecycle management engine. The function entity of the resource management API encapsulates the second-type API corresponding to the resource management engine. These second-type APIs, encapsulated in the function entities, are referred to as target APIs. When any target API is executed, the framework layer provides the target API to the runtime environment Layer, where the runtime environment layer responds to the event of viewing the 3D scene effects by invoking the corresponding software engine through the target API. For example, the runtime environment layer invokes the 3D rendering engine to render the first intermediate resource data, generating the first intermediate 3D scene. Additionally, the lifecycle management engine is called to manage the lifecycle of the first intermediate 3D scene, such as displaying and closing the scene. Furthermore, the resource management engine is invoked to manage the first intermediate resource data, such as storing or caching it locally.

During the process of editing the application logic code:
The 3D application logic editing module 22 responds to the loading operation of the 3D scene resource data by starting the runtime container 30. Once the runtime container 30 is started, the framework layer detects the event for loading the 3D scene resource data. This loading event serves as a specific example of the aforementioned target event, which corresponds to at least one first-type API, such as but not limited to: 3D scene API, lifecycle management API, resource management API, UI interaction API, and event interaction API. Then, based on the logical relationships between these APIs, the function entities of these APIs are executed. The function entities contain second-type APIs, such as: the function entity of the 3D scene API encapsulates the second-type API corresponding to the 3D rendering engine. The function entity of the lifecycle management API encapsulates the second-type API corresponding to the lifecycle management engine. The function entity of the resource management API encapsulates the second-type API corresponding to the resource management engine. The function entity of the UI interaction API encapsulates the second-type API corresponding to the 2D UI engine. The function entity of the event interaction API encapsulates the second-type API corresponding to the event management engine. These second-type APIs, encapsulated in the function entities, are referred to as target APIs. When any target API is executed, the framework layer provides the target API to the runtime environment layer, where the runtime environment layer responds to the loading event of the 3D scene resource data by invoking the corresponding software engine through the target API. For example, the runtime environment layer invokes the 3D rendering engine to render the 3D scene resource data, generating the first intermediate 3D scene. Additionally, the lifecycle management engine is called to manage the lifecycle of the first intermediate 3D scene, such as displaying and closing the scene. Furthermore, the resource management engine is invoked to manage the 3D scene resource data, such as storing or caching it locally. Additionally, the event engine responds to interaction events during the execution of the 3D scene resource data, such as long presses, clicks, rotations, and other interaction events on the interface. In the case where the XR application is implemented as a host 2D application with an embedded 3D scene, the application logic code may include functionality for UI interaction with the host 2D application. In this case, the 2D UI engine can respond to the UI interactions between the application logic code and the host 2D application and handle them accordingly.

The 3D application logic editing module responds to the editing operation of the application logic code by re-invoking the runtime container 30. Once the runtime container 30 is re-invoked, the framework layer detects the event for editing the application logic code. This editing event serves as a specific example of the aforementioned target event, which corresponds to at least one first-type API, such as but not limited to: 3D scene API, lifecycle management API, resource management API, UI interaction API, and event interaction API. Then, based on the logical relationships between these APIs, the function entities of these APIs are executed. The function entities contain second-type APIs. These second-type APIs, encapsulated in the function entities, are referred to as target APIs. When any target API is executed, the framework layer provides the target API to the runtime environment layer, where the runtime environment layer responds to the event of loading the 3D scene static resources by invoking the corresponding software engine through the target API. For a detailed description, please refer to the previous embodiments, and it will not be repeated here.

Based on the above operations, the application content for the XR application can be generated. Afterward, the application generation platform 40 packages the application content together with the runtime container to generate the XR application. Depending on the form of the XR application, different methods can be used to deploy it to the target device. Once the XR application is deployed to the target device, it can be run on that device. Regardless of the method used, the runtime process of the XR application refers to starting the runtime container 30 in the XR application. The runtime container 30 operates between the application content of the XR application and the operating system of the target device where the XR application is located. The runtime container 30 provides the runtime environment for the application content of the XR application, and the application content runs within this environment. This process then presents the 3D scene to the user and supports interaction or control within the 3D scene. As shown in FIG. 4, the framework during the running of XR application has the following structure: at the top is the application content of the XR application, in the middle is the runtime container 30, and at the bottom is the operating system of the target device that hosts the XR application. The runtime container 30 runs above the operating system of the target device and provides the runtime environment for the XR application's content. The application content runs within this runtime environment, presenting the 3D scene to the user and enabling interaction and/or control within the 3D scene. This interaction includes user-triggered interactions as well as interactions and/or controls that are automatically triggered within the 3D scene according to the application's requirements.

In the above framework, the framework layer 32 of the runtime container 30 detects the target event during the running of XR application. It runs the function entity corresponding to at least one first-type API for the target event and provides the target API encapsulated in the function entity to the runtime environment layer 33. The target API refers to the second-type API encapsulated within the function entity. The runtime environment layer 33 is responsible for responding to the target event based on the target API provided by the framework layer 32. Specifically, the runtime environment layer 33 can call the corresponding software engine in the libraries layer 31 to respond to the target event based on the target API. It then passes the response result to the XR application's user interface through the framework layer 32.

During the runtime of the XR application, the target events that can be perceived by the framework layer 32 include but are not limited to: trigger events that initiate the XR application, interaction events with target objects in the XR application, and trigger events that close the XR application, among others. The target objects in the XR application include but are not limited to: 3D models, 2D objects, and interactive areas within the 3D scene. For example, as shown in FIG. 5, 3D models may include character models, object models, or the entire 3D scene model. Similarly, 2D objects include, but are not limited to, images, audio, or videos that need to be displayed within the 3D scene.

In an alternative embodiment, if the XR application is implemented as an independent application form, the user can click, double-click, or long-press the XR application icon to initiate the trigger operation to run the XR application. The framework layer 32 can respond to the trigger operation on the XR application icon by generating the trigger event to run the XR application.

In another alternative embodiment, if the XR application is implemented as a 3D scene embedded within a host 2D application, the host 2D application will provide an access point for the 3D scene. In this application form, the user can click, double-click, or long-press the access point to initiate the trigger operation to run the XR application. The framework layer 32 can respond to the trigger operation on the XR application's access point by generating the trigger event to run the XR application.

Depending on the application scenario of the XR application, the first-type API corresponding to the trigger event for running the XR application may vary. This embodiment does not impose specific limitations on this. For example, the first-type APIs corresponding to the trigger event for running the XR application include: 3D scene API, lifecycle management API, and resource management API. These APIs' function entities encapsulate the corresponding second-type APIs provided by the software engines. For instance: the function entity of the 3D scene API encapsulates the second-type API corresponding to the 3D rendering engine. The function entity of the lifecycle management API encapsulates the second-type API corresponding to the lifecycle management engine. The function entity of the Resource Management API encapsulates the second-type API corresponding to the resource management engine. The framework layer 32, following the application logic, sequentially runs the function entities of the first-type APIs. When executing the second-type APIs encapsulated in these function entities, it provides the second-type API as the target API to the runtime environment layer 33. The runtime environment layer 33 then responds to the trigger event for running the XR application by invoking the corresponding software engine via the target API. For example, the runtime environment layer 33 calls the 3D rendering engine to render the downloaded resources and calls the lifecycle management engine to download the XR application's resource package. It also provides feedback to the framework layer 32 about the download and resource loading status to complete the 3D scene initialization of the XR application. During this process, the resource management engine may also be invoked to manage the XR application's resource package, such as by storing or caching it locally.

Depending on the application scenario of the XR application, the first-type API corresponding to the interaction event with the target object in the XR application may vary. This embodiment does not impose specific limitations on this. For example, the first-type APIs corresponding to interaction events include, but are not limited to: 3D scene API, UI interaction API, and event interaction API. These APIs' function entities encapsulate second-type APIs, such as: the function entity of the 3D scene API encapsulates the second-type API corresponding to the 3D rendering engine. The function entity of the UI interaction API encapsulates the second-type API corresponding to the 2D UI engine. The function entity of the event interaction API encapsulates the second-type API corresponding to the event management engine. The framework layer 32, following the application logic, sequentially runs the function entities of the first-type APIs. When executing the second-type APIs encapsulated in these function entities, it provides the second-type API as the target API to the runtime environment layer 33. The runtime environment layer 33 then responds to the interaction event by invoking the corresponding software engine via the target API. For example, the runtime environment layer calls the 3D rendering engine to render the resource data involved in the interaction event, calls the event engine to respond to the interaction event (e.g., responding to long presses, clicks, rotations, etc., on the interface). If the interaction event involves UI interaction with the host 2D application, the 2D UI engine can also be called to respond to the UI interaction between the XR application and the host 2D application.

For the runtime environment layer 33, depending on the target API, the method of responding to the target event by invoking the corresponding software engine in the libraries layer 31 may vary. Below, we provide an example based on some of the software engines included in the libraries layer 31:
when the target API includes the second-type API corresponding to the download engine in the libraries layer 31, the runtime environment layer will call the download engine to download the XR application's content from the server;
when the target API includes the second-type API corresponding to the storage engine in the libraries layer 31, the runtime environment layer will call the storage engine to manage the storage of the XR application's content;
when the target API includes the second-type API corresponding to the lifecycle management engine in the libraries layer 31, the runtime environment layer will call the lifecycle management engine to handle the lifecycle management of the XR application;
when the target API includes the second-type API corresponding to the 3D rendering engine in the libraries layer 31, the runtime environment layer will call the 3D rendering engine to perform 3D rendering for the XR application;
when the target API includes the second-type API corresponding to the AI inference engine in the libraries layer 31, the runtime environment layer will call the AI inference engine to perform AI inference processing for the XR application;
when the target API includes the second-type API corresponding to the 2D UI engine in the libraries layer 31, the runtime environment layer will call the 2D UI engine to handle the UI interactions between the XR application and the host 2D application;
when the target API includes the second-type API corresponding to the event engine in the libraries layer 31, the runtime environment layer will call the event engine to process the event callback logic within the XR application.

In the following embodiment, taking the XR application as an example of a 3D scene embedded within a host 2D application, let's assume the host 2D application is an e-commerce app. To enhance the fun and user experience of the e-commerce app, a 3D scene can be embedded, such as an AR try-on scene or a VR shopping scene within the app. Using this scenario as an example, the runtime process of the runtime container provided in this embodiment is explained.

In a certain page of the e-commerce app, there is an access point for the XR application. After the user clicks this access point, they enter the 3D scene space presented by the XR application, as shown in FIG. 5. In this embodiment, the application content (or resource package) of the XR application includes 3D scene resource data and application logic code written in JS. This content is developed based on the aforementioned development system. During the runtime of the e-commerce app, when the user triggers access to the XR application's 3D scene space, the three-layer architecture of the runtime container can be invoked. This three-layer architecture supports the display and interaction of the 3D scene space, covering but not limited to the following aspects.

### 1. Management of the XR application lifecycle

In response to the trigger operation of the XR application, the runtime container calls the API corresponding to the download library in the second-type API to download the XR application's resource package. This completes the resource loading for the XR application. Then, it calls the API corresponding to the 3D rendering engine in the second-type API, using the 3D rendering engine to render the 3D scene for the XR application. This enables the display of the 3D scene space on the relevant page of the e-commerce app. Additionally, the runtime container responds to the exit or close operation of the XR application. When the XR application exits, it performs necessary resource cleanup (such as clearing memory and releasing CPU resources) to manage the lifecycle of the XR application effectively.

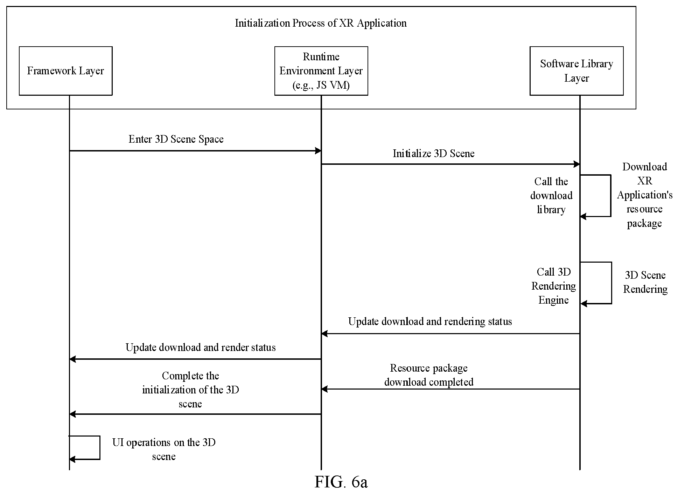

Further, the lifecycle management process of the XR application is explained in conjunction with the three-layer architecture of the runtime container. As shown in FIG. 6a, the process of initializing the XR application includes: in response to the trigger operation of entering the 3D scene space, the framework layer transitions into the 3D scene, triggering the runtime VM to initialize the 3D scene; the runtime VM calls the download library in the software library layer to download the XR application's resource package; the runtime VM calls the 3D rendering engine to render the 3D scene based on the downloaded resources and updates the resource download and rendering status, which is then provided to the framework layer. Once the resource package for the XR application is fully downloaded, the download library notifies the runtime VM that the download is complete; the runtime VM notifies the framework layer that the 3D scene initialization is complete. The framework layer then completes UI operations and other tasks related to the 3D scene. Additionally, it should be noted that the XR application's resource package may be encrypted and compressed. In this case, before rendering, the runtime VM can also call the corresponding engine to decrypt and decompress the resource package.

2. When the user triggers the first type of operation in the 3D scene space, the first type of operation refers to an action that triggers a function call. The function being called is responsible for responding to the first type of operation and taking appropriate action in response.

Taking the 3D scene space shown in FIG. 5 as an example, the first type of operations triggered by the user include, but are not limited to, the following:
the user operates the joystick in the 3D scene to move the character model, which may trigger a series of actions, such as changes in position and scene during roaming mode, which can be responded to and processed by a callback function;
the user manipulates the camera perspective, which triggers changes in the scene, and these changes can be responded to and processed by a callback function;
the user clicks on the screen to trigger a play function, which triggers actions such as playing music or special effects, as well as switching the map. These changes can also be responded to and processed by a callback function.

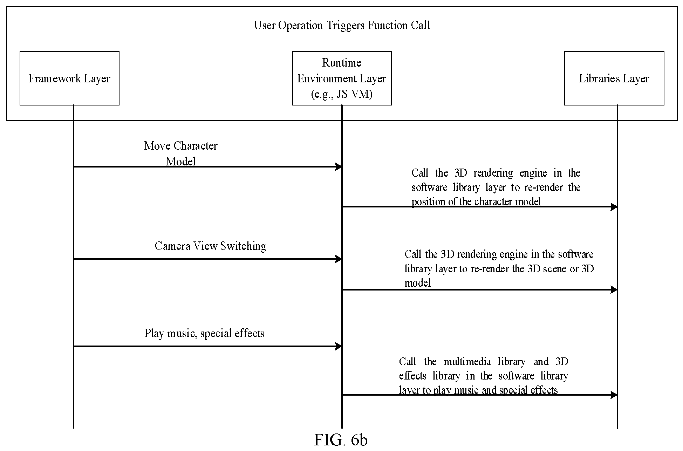

Further, combining the three-layer architecture of the runtime container, the process of handling user-triggered function calls is explained. As shown in FIG. 6b, the process of handling the first type of operation triggered by the user includes:
case 1: the framework layer responds to the user's operation of moving the character model. It notifies the runtime VM of this operation, and the runtime VM calls the 3D rendering engine in the software library layer to re-render the position of the character model;
case 2: the framework layer responds to the user's operation of switching the camera perspective, and notifies the runtime VM of this operation, and the runtime VM calls the 3D rendering engine in the software library layer to re-render the 3D scene or 3D model, thereby obtaining the new 3D scene or model from the new perspective;
case 3: the framework layer responds to the user's operation of playing music or special effects, and notifies the runtime VM of this operation, and the runtime VM calls the multimedia library and 3D effects library in the software library layer to play the music or special effects.

3. When the user triggers the second type of operation in the 3D scene space, the second type of operation refers to an action that triggers an event callback. The callback event is responsible for responding to the second type of operation and taking appropriate action in response.

For example, as shown in FIG. 5, the situation where the user triggers an event callback with a second type of operation includes, but is not limited to: when the user moves the character model, the 3D rendering engine performs collision detection. If the character model approaches or moves away from a specified model object, it triggers an event callback to the upper application logic layer for handling, such as popping up a red envelope, coupon, or event message.

Further, combining the three-layer architecture of the runtime container, the process of handling user-triggered event callbacks is explained. As shown in FIG. 6c, the process of handling the second type of operation triggered by the user includes:
case 1: the VM calls the 3D rendering engine in the software library layer to monitor whether the 3D model (taking the character model as an example) collides with a specified object, referred to as physical collision detection; when the character model is detected to be approaching a predefined object, the runtime VM provides feedback to the framework layer; the framework layer then executes the corresponding code in the target application logic data to respond, for example, by displaying red envelope information.
case 2: the VM calls the 3D rendering engine in the software library layer to monitor whether the 3D model (taking the character model as an example) collides with a specified object, referred to as physical collision detection; when the character model is detected to have moved away from the predefined object, the runtime VM provides feedback to the framework layer; the framework layer then calls the corresponding code data in the target application logic to respond, for example, by canceling the display of the red envelope information.

The XR application development system provided by this embodiment has the following beneficial effects:
(1) cross-device and high performance: by implementing the foundational capabilities in the libraries layer using C++ and optimizing them accordingly for better performance, such as parallel computing acceleration of device instruction sets, cross-device functionality is achieved at the code execution level; furthermore, when encapsulating these foundational capabilities into APIs, secondary encapsulation can be done for different devices' APIs, allowing the XR application to also achieve cross-device functionality at the interaction layer, which ultimately enhances the performance of the XR application;
(2) fast iteration: by choosing dynamic programming languages like Python or JS to implement the application logic of the XR application and the runtime VM, the runtime VM serves as a glue layer that calls the foundational capabilities in the libraries layer, which are implemented in C++; the iteration frequency of the foundational capabilities in the libraries layer is relatively low and can be updated via version updates; however, the update frequency of the XR application's application logic is much higher; by using dynamic programming languages, the advantages of dynamic languages enable quick release and updates of the application logic, while still ensuring high overall performance;
(3) lightweight: according to the development requirements of the XR application, the software engines or libraries in the libraries layer can be made more lightweight; for example, unnecessary software libraries can be discarded, and some libraries can be introduced via integration rather than direct porting; additionally, the software engines or libraries in the libraries layer are dynamically distributed, rather than being bundled with the XR application's installation package or the host 2D application's installation package, further achieving a lightweight design. Furthermore, when the system includes an AI inference engine, the MNN engine is used for image processing, matrix calculations, and other operations, which helps reduce the package size of the AI inference engine on the client side, further contributing to the lightweight nature of the system;
(4) low threshold: by encapsulating the foundational capabilities in the libraries layer and exposing first-type APIs to application developers through the framework layer, the basic capabilities provided by the 3D rendering engine, such as rendering, physics, and animation, are abstracted and encapsulated; a limited number of concepts, such as XRScene, XRModel, XRAnchor, XREvent, and XRConfig, are provided, making it easier for XR application developers to understand and use these capabilities;
(5) monitoring and maintenance: as the XR application runs, its stability can be monitored, and real-time data on crashes, performance issues, page performance, and other metrics can be collected. Based on this monitoring data, post-operation maintenance activities for the XR application can be performed; these maintenance activities include, but are not limited to: patching and bug fixes, configuration adjustments, and other related tasks to ensure the continued performance and stability of the XR application.

In this embodiment, a toolchain for editing 3D scenes embedded within a host 2D application is constructed based on the runtime container, namely the content generator 20. The structure and functionality of this toolchain can be referenced from the previously described FIG. 6d example, and will not be repeated here. The content generator 20, based on the runtime container, is designed to meet the constraints of package size, performance, and effects for embedding into a 2D application. This results in the following effects:
(1) efficiency improvement: the integration of the runtime container in the content generator significantly reduces communication and collaboration costs between artists and technical teams; by leveraging the 3D rendering engine in the software library layer of the runtime container, the "what you see is what you get" editing of 3D scene effects can be achieved, making it easier for application developers to edit both the 3D scene effects and the application logic code.
(2) consistent effects: the 3D content generator and the target device reuse the same runtime container, ensuring consistency between the content editing and the runtime effects on the target device;
(3) standardization constraints: the 3D content generator embeds custom 3D model standards, covering aspects such as geometry, materials, lighting, camera, animations, and more; The final 3D scene export is validated against these 3D model standards, ensuring that the finalized 3D models adhere to the required standards and meet the constraints for performance and effects when the XR application runs on the target device.

In addition to providing the XR application development system, this embodiment also offers an XR application development method, an XR application editing method, and an XR application running method. The following embodiments will describe the XR application development method, the XR application editing method, and the XR application running method separately.

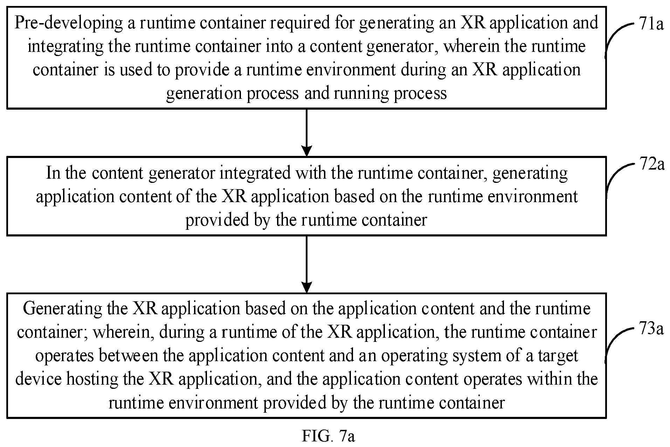

FIG. 7a is a flowchart illustrating an XR application development method provided by this embodiment. This method is applied to the XR application development system mentioned earlier. As shown in FIG. 7a, the method includes the following steps:
71a: pre-developing a runtime container required for generating an XR application and integrating the runtime container into a content generator, wherein the runtime container is used to provide a runtime environment during an XR application generation process and running process;
72a: in the content generator integrated with the runtime container, generating application content of the XR application based on the runtime environment provided by the runtime container;
73a: generating the XR application based on the application content and the runtime container; wherein, during a runtime of the XR application, the runtime container operates between the application content and an operating system of a target device hosting the XR application, and the application content operates within the runtime environment provided by the runtime container.

In an alternative embodiment, in the content generator integrated with the runtime container, the application content of the XR application is generated based on the runtime environment provided by the runtime container, including the following steps: respond to the XR application generation operation and load the 3D scene static resources; based on the runtime environment provided by the runtime container, add 3D scene dynamic information to the 3D scene static resources to generate 3D scene resource data; based on the runtime environment provided by the runtime container, edit the application logic code for the 3D scene resource data to generate the XR application's application content. For the detailed implementation of each step, refer to the previous system embodiment or the related description in the method embodiment, which will not be repeated here.

In an alternative embodiment, the XR application is generated based on the application content and the runtime container, including the following steps: integrate the runtime container and the application content into the installation package of the XR application and publish the installation package of the XR application; and/or, integrate the runtime container into the installation package of the host 2D application and publish the installation package of the host 2D application. Additionally, publish the application content to the resource server corresponding to the host 2D application. The host 2D application is a 2D application that requires embedding the XR application.

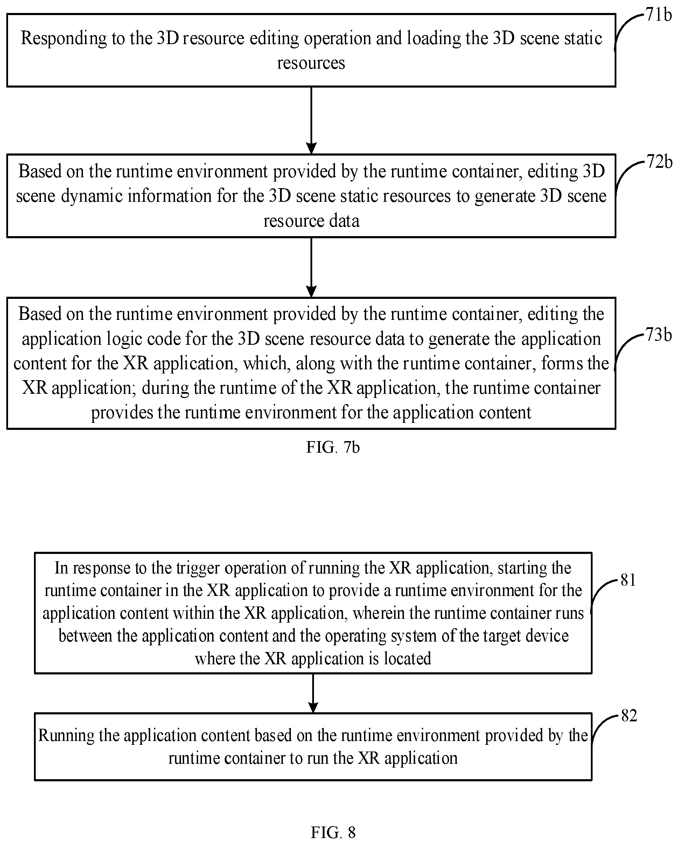

FIG. 7b is a flowchart illustrating the XR application editing method provided by this embodiment. This method is applied to the content generator in the XR application development system, where the content generator integrates the runtime container. The runtime container is used to provide the runtime environment during the XR application generation process or running process. As shown in FIG. 7b, the method includes the following steps:
71b: responding to the 3D resource editing operation and loading the 3D scene static resources;
72b: based on the runtime environment provided by the runtime container, editing 3D scene dynamic information for the 3D scene static resources to generate 3D scene resource data;
73b: based on the runtime environment provided by the runtime container, editing the application logic code for the 3D scene resource data to generate the application content for the XR application, which, along with the runtime container, forms the XR application; during the runtime of the XR application, the runtime container provides the runtime environment for the application content.

In an alternative embodiment, based on the runtime environment provided by the runtime container, 3D scene dynamic information is added to the 3D scene static resources to generate 3D scene resource data, including the following steps:
responding to the loading operation of the 3D scene static resources: start the runtime container, and run the 3D scene static resources in the runtime environment provided by the runtime container to obtain the 3D static image;
responding to the editing operation on the 3D static image: edit the 3D scene dynamic information for the 3D scene static resources to generate the first intermediate resource data;
responding to the scene effect viewing operation: reinvoke the runtime container, and run the first intermediate resource data in the runtime environment provided by the runtime container to obtain the first intermediate 3D image;
if the first intermediate 3D image does not achieve the scene effect: adjust the 3D scene dynamic information to achieve the scene effect, thereby obtaining the 3D scene resource data.

In an alternative embodiment, based on the runtime environment provided by the runtime container, application logic code is edited for the 3D scene resource data to generate the XR application's application content, including the following steps:
responding to the loading operation of the 3D scene resource data: start the runtime container, and run the 3D scene resource data in the runtime environment provided by the runtime container to obtain the first intermediate 3D image;
responding to the editing operation of the application logic code: generate the second intermediate resource data based on the 3D scene resource data and application logic code, then reinvoke the runtime container to run the second intermediate resource data in the runtime environment provided by the runtime container to obtain the second intermediate 3D image;
if the second intermediate 3D image does not achieve the interactive effect: adjust the application logic code to achieve the interactive effect, thereby generating the XR application's application content.

In an alternative embodiment, the runtime container includes: the framework layer, the runtime environment layer, and the software library layer. For the architecture and working principles of the runtime container, please refer to the previous embodiments, and they will not be repeated here.

Based on the above, running the 3D scene static resources in the runtime environment provided by the runtime container to obtain the 3D static image includes the following steps: the framework layer detects the first loading event of the 3D scene static resources and executes at least one function entity corresponding to the first-type API of the first loading event; when the first target API, encapsulated in the function entity, is reached, it is provided to the runtime environment layer, and the first target API belongs to the second-type API; the runtime environment layer responds to the first loading event by calling the corresponding software engine in the software library layer based on the first target API;
similarly, running the first intermediate resource data in the runtime environment provided by the runtime container to obtain the first intermediate 3D image includes the following steps: the framework layer detects the first editing event on the 3D static image and executes at least one function entity corresponding to the first-type API of the first editing event; when the first target API, encapsulated in the function entity, is reached, it is provided to the runtime environment layer, and the first target API belongs to the second-type API; the runtime environment layer responds to the first editing event by calling the corresponding software engine in the software library layer based on the first target API.

Similarly, running the 3D scene resource data in the runtime environment provided by the runtime container to obtain the first intermediate 3D image includes the following steps:
the framework layer detects the second loading event of the 3D scene resource data and executes at least one function entity corresponding to the first-type API of the second loading event; when the second target API, encapsulated in the function entity, is reached, it is provided to the runtime environment layer, wherein the second target API belongs to the second-type API; the runtime environment layer responds to the second loading event by calling the corresponding software engine in the software library layer based on the second target API.

Similarly, running the second intermediate resource data in the runtime environment provided by the runtime container to obtain the second intermediate 3D image includes the following steps: the framework layer detects the second editing event of the application logic code and executes at least one function entity corresponding to the first-type API of the second editing event; when the second target API, encapsulated in the function entity, is reached, it is provided to the runtime environment layer, wherein the second target API belongs to the second-type API; the runtime environment layer responds to the second editing event by calling the corresponding software engine in the software library layer based on the second target API.

FIG. 8 is a flowchart illustrating the XR application running method provided by this embodiment. This method is applied to the runtime container in the XR application development system mentioned earlier. As shown in FIG. 8, the method includes the following step:
81: in response to the trigger operation of running the XR application, starting the runtime container in the XR application to provide a runtime environment for the application content within the XR application, wherein the runtime container runs between the application content and the operating system of the target device where the XR application is located;
82: running the application content based on the runtime environment provided by the runtime container to run the XR application.

In an alternative embodiment, before responding to the trigger operation of running the XR application, the method further includes: installing the runtime container and application content of the XR application on the target device based on the XR application's installation package. The installation package of the XR application includes both the runtime container and the application content. Accordingly, responding to the trigger operation for running the XR application may include responding to a double-click, long press, or other trigger actions on the XR application's icon to start the XR application.

And/or,
in an alternative embodiment, before responding to the trigger operation of running the XR application, the method further includes: installing the runtime container on the target device based on the installation package of the host 2D application, where the host 2D application is a 2D application that needs to embed the XR application. The installation package of the host 2D application includes the runtime container, and the application content is published to the resource server corresponding to the host 2D application for dynamic loading. During the runtime of the host 2D application, the access point information for the XR application can be displayed. Accordingly, responding to the trigger operation of running the XR application may include responding to a trigger action on this access point information, such as a click or long press. Additionally, in this scenario, before running the application content based on the runtime environment provided by the runtime container, it also includes downloading the application content from the resource server.

In an alternative embodiment, the runtime container includes: the framework layer, the runtime environment layer, and the software library layer. For the architecture and working principles of the runtime container, please refer to the previous embodiments, and they will not be repeated here.

Accordingly, running the application content based on the runtime environment provided by the runtime container to run the XR application includes the following steps:
the framework layer detects the target event during the runtime of the XR application and executes at least one function entity corresponding to the first-type API of the target event, providing the target API encapsulated in the function entity to the runtime environment layer. The target API belongs to the second-type API;
the runtime environment layer, based on the target API provided by the framework layer, calls the corresponding software engine in the software library layer to respond to the target event, thus running the XR application;
the first-type API is obtained by encapsulating the second-type API, and the second-type API corresponds to the API of the software engine included in the software library layer.

The runtime environment layer, based on the target API provided by the framework layer, calls the corresponding software engine in the software library layer to respond to the target event, including at least one of the following operations:
when the target API includes the second-type API corresponding to the download engine in the software library layer, call the download engine to download the XR application's application content from the server;
when the target API includes the second-type API corresponding to the storage engine in the software library layer, call the storage engine to manage the storage of the XR application's application content;
when the target API includes the second-type API corresponding to the lifecycle management engine in the software library layer, call the lifecycle management engine to manage the lifecycle of the XR application;
when the target API includes the second-type API corresponding to the 3D rendering engine in the software library layer, call the 3D rendering engine to perform 3D rendering of the XR application;
when the target API includes the second-type API corresponding to the AI inference engine in the software library layer, call the AI inference engine to perform AI inference processing on the XR application;
when the target API includes the second-type API corresponding to the 2D UI engine in the software library layer, call the 2D UI engine to handle the UI interaction between the XR application and the host 2D application;
when the target API includes the second-type API corresponding to the event engine in the software library layer, call the event engine to process the event callback logic in the XR application.

In an alternative embodiment, the runtime environment layer includes at least one runtime virtual machine (VM). Different runtime VMs are implemented using different dynamic programming languages, and they provide runtime environments for XR applications implemented in those different dynamic programming languages. Accordingly, when there are plurality of runtime VMs, the method further includes: the runtime environment layer scheduling the target VM that implements the same dynamic programming language as the XR application from among the plurality of runtime VMs, so that the target VM can serve the XR application.

In addition to the above embodiments, this embodiment also provides an XR content runtime method, which is applied to a host application embedded with an XR runtime container. The XR runtime container is located within the installation package of the host application and can be installed together with the host application. The implementation structure and functionality of the XR runtime container can be referred to in the previous embodiment of the runtime container. In this embodiment, the host application is embedded with the XR runtime container to provide the runtime environment for running XR content. By running the XR content in the runtime environment provided by the XR runtime container, the goal of presenting the XR content within the host application is achieved. Based on this, the XR content runtime method includes the following steps: run the host application; during the runtime of the host application, display the access entry information for the XR content, for example, this access entry information can be a link or an icon/control with link functionality on a page provided by the host application, which is not limited to any specific form; respond to the trigger operation on the access entry information by starting the XR runtime container and retrieving the XR content; run the XR content based on the runtime environment provided by the XR runtime container. For the detailed implementation of running XR content in the runtime environment provided by the XR runtime container, it is the same or similar to the detailed embodiment described earlier in the section on "running the application content of the XR application based on the runtime environment provided by the runtime container," and will not be repeated here.

In this embodiment, the method of acquiring XR content is not limited. In an alternative embodiment, the XR content is deployed on the resource server corresponding to the host application. In this case, the method of acquiring XR content includes: downloading the XR content from the resource server corresponding to the host application. In another alternative embodiment, the XR content can also be embedded within the host application. For example, the XR content is located within the installation package of the host application and is installed together with the host application. In this case, the method of acquiring XR content includes: loading the XR content from the local cache.

In this embodiment, the XR content can be implemented as the application content of the XR application described in the previous embodiments. Accordingly, by combining the XR content with the XR runtime container, it can be realized as the XR application described in the previous embodiments.

The detailed implementation methods and beneficial effects of each step in the above method embodiments have been thoroughly described in the previous embodiments. Therefore, they will not be elaborated upon here.

It should be noted that the execution entities for each step of the methods provided in the above embodiments can be the same device, or the method can be executed by different devices. For example, the execution entity for steps 71 to 73 can be device A; alternatively, the execution entity for steps 71 and 72 can be device A, while the execution entity for step 73 can be device B; and so on.

Additionally, in some of the processes described in the above embodiments and figures, a plurality of operations are listed in a specific sequence. However, it should be clearly understood that these operations do not necessarily have to be executed in the order they appear in this document, nor do they need to be executed sequentially or can be executed in parallel. The numbering, such as 71, 72, etc., is merely for distinguishing between different operations, and the numbers themselves do not represent any execution order. Furthermore, these processes may include more or fewer operations, and these operations can be executed in sequence or in parallel. It should also be noted that the terms "first", "second", etc., are used to distinguish different messages, devices, modules, etc., and do not imply any specific order, nor do they limit the "first" and "second" to be of different types.

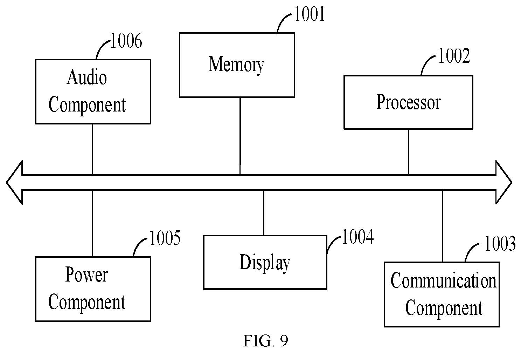

FIG. 9 is a structural schematic diagram of an electronic device provided by this embodiment. As shown in FIG. 9, the electronic device includes: a memory 1001 and a processor 1002.

The memory 1001 is used to store computer programs and can be configured to store other various data to support operations on the electronic device. Examples of such data include instructions for operating any application or method on the electronic device, messages, images, videos, etc.

The processor 1002, coupled with the memory 1001, is used to execute the computer programs stored in the memory 1001 to implement the steps of the XR application development method, the XR application editing method, the XR application running method, or the XR content runtime method provided by this embodiment.

For detailed descriptions of the XR application development method, XR application editing method, XR application running method, or XR content runtime method, please refer to the previous embodiments. These will not be elaborated upon here.

Furthermore, as shown in FIG. 9, the electronic device also includes other components such as a communication component 1003, display 1004, power component 1005, audio component 1006, and so on. FIG. 9 only shows a portion of the components and does not imply that the electronic device includes only the components shown in the figure. When executing the XR application editing method or XR application running method, the electronic device in this embodiment can be implemented as a terminal device such as a desktop computer, laptop, smartphone, or IoT device, or it can also be implemented as an AR or VR device. In the case where the electronic device is implemented as an AR or VR device, it may also include components like a controller, which are not shown in FIG. 9. When executing the XR application development method, the electronic device in this embodiment can be implemented as a desktop computer, laptop, smartphone, or other terminal devices that run both the content generator and runtime container, or it can be implemented as a traditional server, cloud server, or a system with a cloud-end and terminal-end integration. This is not limited.

Accordingly, this embodiment also provides a computer-readable storage medium that stores a computer program. When the computer program is executed by a processor, it causes the processor to implement the steps of the XR application development method, the XR application editing method, or the XR application running method, or the XR content runtime method as described above.

The aforementioned memory can be implemented by any type of volatile or non-volatile storage device or a combination of them, such as Static Random-Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic storage, flash memory, magnetic disks, or optical disks.

The communication component is configured to facilitate wired or wireless communication between the device containing the communication component and other devices. The device containing the communication component can access wireless networks based on communication standards, such as Wi-Fi, 2G, 3G, 4G/LTE, 5G, or their combinations. In an exemplary embodiment, the communication component receives broadcast signals or broadcast-related information from an external broadcast management system via a broadcast channel. In another exemplary embodiment, the communication component also includes a Near Field Communication (NFC) module to facilitate short-range communication. For example, the NFC module may use technologies such as Radio Frequency Identification (RFID), Infrared Data Association (IrDA), Ultra Wide Band (UWB), Bluetooth (BT), and other technologies to achieve communication.

The display includes a screen, which may include a Liquid Crystal Display (LCD) and a TouchPanel (TP). If the screen includes a touch panel, it can be implemented as a touchscreen to receive input signals from the user. The touch panel includes one or more touch sensors to detect touches, swipes, and gestures on the touch panel. The touch sensors can not only sense the boundaries of touch or swipe actions but also detect the duration and pressure associated with the touch or swipe operations.

The power component provides power to the various components of the device in which it is located. The power component may include a power management system, one or more power sources, and other components associated with generating, managing, and distributing power to the device's components.

The audio component can be configured to output and/or input audio signals. For example, the audio component includes a microphone (MIC), which, when the device is in an operational mode such as a calling mode, recording mode, or voice recognition mode, is configured to receive external audio signals. The received audio signals can be further stored in the memory or transmitted via the communication component. In some embodiments, the audio component also includes a speaker for outputting audio signals.

Those skilled in the art will appreciate that the embodiments of this application can be provided as methods, systems, or computer program products. Therefore, the application can be implemented in the form of a purely hardware embodiment, a purely software embodiment, or a combination of both software and hardware. Furthermore, the application can be implemented in the form of a computer program product on a computer-readable storage medium that contains computer-usable program code, including but not limited to disk storage, Compact Disc Read-Only Memory (CD-ROM), optical storage, and other similar media.

This application is described with reference to the flowcharts and/or block diagrams of methods, devices (systems), and computer program products according to the embodiments of this application. It should be understood that each process and/or block in the flowchart and/or block diagram, as well as the combination of processes and/or blocks in the flowchart and/or block diagram, can be implemented by computer program instructions. These computer program instructions can be provided to a general-purpose computer, special-purpose computer, embedded processor, or other programmable data processing device's processor to form a machine, such that the instructions executed by the processor of the computer or other programmable data processing device produce a device for performing the functions specified in one or more processes of the flowchart or one or more blocks of the block diagram.

These computer program instructions may also be stored in a computer-readable storage medium that can guide a computer or other programmable data processing device to operate in a specific manner. The instructions stored in the computer-readable storage medium result in the manufacture of a device that includes the instructions, and this device implements the functions specified in one or more processes of the flowchart or one or more blocks of the block diagram.

These computer program instructions can also be loaded onto a computer or other programmable data processing device, so that a series of operational steps are performed on the computer or other programmable device to produce a computer-implemented process. As a result, the instructions executed on the computer or other programmable device provide steps for performing the functions specified in one or more processes of the flowchart or one or more blocks of the block diagram.

In a typical configuration, a computing device includes one or more processors (Central Processing Unit, CPU), input/output interfaces, network interfaces, and memory.

The memory may include non-volatile storage in computer-readable media, such as Random Access Memory (RAM) and/or non-volatile memory, such as Read-Only Memory (ROM) or flash memory (flash RAM). The memory is an example of computer-readable media.

Computer-readable media include both permanent and non-permanent, removable and non-removable media that can implement information storage by any method or technique. The information can be computer-readable instructions, data structures, modules of programs, or other data. Examples of computer storage media include, but are not limited to, Phase-change Random Access Memory (PRAM), Static Random Access Memory (SRAM), Dynamic Random Access Memory (DRAM), other types of Random Access Memory (RAM), Read-Only Memory (ROM), Electrically Erasable Programmable Read-Only Memory (EEPROM), flash memory or other memory technologies, CD-ROM (Compact Disc Read-Only Memory), Digital Video Disc (DVD) or other optical storage, magnetic tape, magnetic disk storage, or other magnetic storage devices, or any other non-transitory medium that can be used to store information that can be accessed by a computing device. As defined herein, computer-readable media do not include transitory computer-readable media, such as modulated data signals and carrier waves.

It should also be noted that the terms "include," "comprise," or any variations thereof are intended to encompass non-exclusive inclusion. Thus, a process, method, product, or device that includes a series of elements not only includes those elements but may also include other elements that are not explicitly listed, or elements inherent to such a process, method, product, or device. Without additional restrictions, an element defined by the phrase "including a..." does not exclude the presence of additional identical elements in the process, method, product, or device that includes the element.

The above is merely an embodiment of this application and is not intended to limit the scope of the application. For those skilled in the art, various modifications and changes can be made to this application. Any modifications, equivalent replacements, improvements, etc., made within the spirit and principles of this application should be included within the scope of the claims of this application.

## Claims

1. An XR application development system for terminal devices, comprising:
a runtime container for generating an XR application, configured to provide a runtime environment during generation and running of the XR application;
a content generator, internally integrating the runtime container, configured to generate application content for the XR application based on the runtime environment provided by the runtime container;
an application generation platform, configured to generate the XR application based on the application content and the runtime container,
wherein, during the runtime of the XR application, the runtime container operates between the application content and an operating system of a target device where the XR application is located, and the application content operates within the runtime environment provided by the runtime container.

2. The system according to claim 1, wherein the runtime container comprises:
a framework layer, a runtime environment layer, and a software library layer;
wherein:
the software library layer includes a plurality of software engines and provides a second type of application programming interface (API) for each of the plurality of software engines, to be used for encapsulating and obtaining a first type of API based on the second type API;
the framework layer is configured to provide the first type of API to an application developer, enabling the application developer to write application logic code for the XR application based on the first type of API, and to sense a target event during the generation or running of the XR application, run at least one function entity corresponding to the first type of API for the target event, and provide a target API encapsulated in the function entity to the runtime environment layer, wherein the target API belongs to the second type of API;
the runtime environment layer is configured to respond to the target event by invoking the corresponding software engine in the software library layer based on the target API.

3. The system according to claim 2, wherein the software library layer is further configured to:
provide the second type of API to the runtime environment layer, and encapsulate the second type of API to obtain the first type of API, and provide the first type of API to the framework layer for the framework layer to provide the first type of API to an application developer;
or
the software library layer is further configured to: provide the second type of API to the runtime environment layer; and the runtime environment layer is further configured to: encapsulate the second type of API to obtain the first type of API, and provide the first type of API to the framework layer for the framework layer to provide the first type of API to an application developer.

4. The system according to claim 2, wherein, to sense a target event during the running of the XR application, the framework layer is configured to:
responding to a trigger operation on an icon or an access entry of the XR application, generate a trigger event to run the XR application;
and/or
responding to an interactive operation during the running of the XR application, generate an interaction event with a target object in the XR application, wherein the target object includes at least one of a 3D model in a 3D scene, a 2D object, or an interactive region.

5. The system according to claim 2, wherein to respond to the target event based on the target API by invoking the corresponding software engine in the software library layer, the runtime environment layer is configured to perform at least one of following operations:
when the target API includes the second type of API corresponding to a download engine in the software library layer, calling the download engine to download application content for the XR application from a server;
when the target API includes the second type of API corresponding to a storage engine in the software library layer, calling the storage engine to manage storage of the application content for the XR application;
when the target API includes the second type of API corresponding to a lifecycle management engine in the software library layer, calling the lifecycle management engine to manage a lifecycle of the XR application;
when the target API includes the second type of API corresponding to a 3D rendering engine in the software library layer, calling the 3D rendering engine to perform 3D rendering of the XR application;
when the target API includes the second type of API corresponding to an AI inference engine in the software library layer, calling the AI inference engine to perform AI inference processing for the XR application;
when the target API includes the second type of API corresponding to a 2D UI engine in the software library layer, calling the 2D UI engine to handle UI interaction between the XR application and a host 2D application;
when the target API includes the second type of API corresponding to an event engine in the software library layer, calling the event engine to process event callback logic in the XR application.

6. The system according to any one of claims 2 to 5, wherein the runtime environment layer includes at least one runtime virtual machine (VM), with different runtime VMs implemented using different dynamic programming languages, for providing a runtime environment for XR applications implemented using different dynamic programming languages.

7. The system according to claim 6, wherein, in a case of a plurality of runtime virtual machines (VMs), the runtime environment layer further includes:
a VM scheduling module configured to schedule, based on the dynamic programming language used by the XR application, a target VM in the plurality of runtime VMs that is implemented using the same dynamic programming language as the XR application, such that the target VM provides the runtime environment for the XR application.

8. The system according to any one of claims 2 to 5, wherein the content generator is specifically configured to:
in response to an XR application generation operation, load a 3D scene static resource, and based on the runtime environment provided by the runtime container, add 3D scene dynamic information and application logic code to the 3D scene static resource to generate the application content for the XR application.

9. The system according to claim 8, wherein the content generator further comprises: a 3D scene effect editing module, configured to respond to the XR application generation operation, load the 3D scene static resource, and based on the runtime environment provided by the runtime container, edit 3D scene dynamic information for the 3D scene static resource to generate 3D scene resource data;
a 3D application logic editing module, configured to edit application logic code for the 3D scene resource data based on the runtime environment provided by the runtime container, to generate the application content for the XR application.

10. The system according to claim 9, wherein the 3D scene effect editing module is specifically configured to:
responding to a loading operation of the 3D scene static resource, initiate the runtime container, and run the 3D scene static resource within the runtime environment provided by the runtime container to generate a 3D static image;
responding to an editing operation on the 3D static image, edit the 3D scene dynamic information for the 3D scene static resource to generate first intermediate resource data;
responding to an effect view trigger operation, re-initiate the runtime container, and run the first intermediate resource data within the runtime environment provided by the runtime container to generate a first intermediate 3D image;
in a case where the first intermediate 3D image does not achieve the scene effect, adjust the 3D scene dynamic information to achieve the scene effect, and generate the 3D scene resource data.

11. The system according to claim 9, wherein the application logic editing module is specifically configured to:
responding to a trigger operation for editing application logic code, initiate the runtime container, and run the 3D scene resource data within the runtime environment provided by the runtime container to generate a first intermediate 3D image;
responding to the operation of loading the application logic code, generate second intermediate resource data based on the 3D scene resource data and the application logic code, and re-initiate the runtime container, and run the second intermediate resource data within the runtime environment provided by the runtime container to generate a second intermediate 3D image;
in a case where the second intermediate 3D image does not achieve an interaction effect, adjust the application logic code to achieve the interaction effect, and generate the application content for the XR application.

12. A method for developing an XR application for terminal devices, comprising:
pre-developing a runtime container required for generating an XR application and integrating the runtime container into a content generator, wherein the runtime container is used to provide a runtime environment during an XR application generation process and running process;
in the content generator integrated with the runtime container, generating application content of the XR application based on the runtime environment provided by the runtime container;
generating the XR application based on the application content and the runtime container;
wherein, during the running process of the XR application, the runtime container operates between the application content and an operating system of a target device hosting the XR application, and the application content operates within the runtime environment provided by the runtime container.

13. The method according to claim 12, wherein, in the content generator integrated with the runtime container, generating the application content for the XR application based on the runtime environment provided by the runtime container comprises:
responding to an XR application generation operation, loading a 3D scene static resource;
adding 3D scene dynamic information to the 3D scene static resource based on the runtime environment provided by the runtime container, to obtain 3D scene resource data;
editing application logic code for the 3D scene resource data based on the runtime environment provided by the runtime container, to obtain the application content for the XR application.

14. The method according to claim 12 or 13, wherein generating the XR application based on the application content and the runtime container, comprises:
integrating the runtime container and the application content into an installation package of the XR application and publishing the installation package of the XR application;
and/or
integrating the runtime container into an installation package of a host 2D application and publishing the installation package of the host 2D application, and publishing the application content to a resource server corresponding to the host 2D application, where the host 2D application is a 2D application that needs to embed the XR application.

15. An electronic device, wherein comprises a memory and a processor, the memory being used to store a computer program; the processor being coupled to the memory and configured to execute the computer program to implement the steps of the method according to any of claims 12-14.

16. A computer-readable storage medium storing a computer program, wherein when the computer program is executed by a processor, it causes the processor to perform the steps of the method according to any of claims 12-14.
